(19) Europäisches Patentamt
European Patent Office
Office européen des brevets

(11) **EP 4 389 067 A1**

(12) **EUROPEAN PATENT APPLICATION**

(43) Date of publication:
**26.06.2024 Bulletin 2024/26**

(21) Application number: **22215673.9**

(22) Date of filing: **21.12.2022**

(51) International Patent Classification (IPC):
*A61C 19/06* (2006.01)    *A61C 8/00* (2006.01)

(52) Cooperative Patent Classification (CPC):
**A61C 8/0013; A61C 8/0048; A61C 8/005;
A61C 8/0075; A61C 19/063**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Institut Straumann AG
4052 Basel (CH)**

(72) Inventors:
• **BELLÓN PECECNIK, Benjamin**
 **4052 Basel (CH)**
• **PIPPENGER, Benjamin**
 **4052 Basel (CH)**
• **WAGNER, Raphael S.**
 **4052 Basel (CH)**

(74) Representative: **Aera A/S
Niels Hemmingsens Gade 10, 5th Floor
1153 Copenhagen K (DK)**

(54) **INDUCED CONTROLLED REGENERATION OF SOFT TISSUE AT PLACEMENT SITES OF PERCUTANEOUS DENTAL DEVICES**

(57) The present invention relates to the use of a percutaneous dental device which comprises a soft-tissue region with at least two distinct surface regions with different isotropic surface-topographies forming at their interphase an *in situ CEJ*, for improving soft tissue heating and/or soft tissue regeneration of the supracrestal epithelium and the supracrestal connective tissue at the placement site of the device. A novel dental device is disclosed that mimics a natural tooth surface in the section of the device that is in direct contact with the soft tissue above and below its *in situ CEJ*, thus guiding and inducing the soft tissue heating and/or regeneration surrounding a dental device after implant or after placement.

*Fig. 21a*

## Description

### Technical field

The present invention relates to the field of improved regrowth and/or regeneration of biological width at the placement site of percutaneous, such as transmucosal, dental devices, wherein a more natural supracrestal attached tissue is regenerated after placement.

The improved biological width is brought on by the use of a novel percutaneous dental device, comprising an at least biphasic surface in its soft tissue region, at their interphase forming an *in situ* cemento-enamel junction (CEJ), wherein the at least two different surfaces are individually adapted to induce and/or guide soft tissue healing and/or regeneration of histologically more natural compositions of soft tissue type layers above and below the *in situ* cemento-enamel junction (CEJ) of the device, respectively.

The current invention thus for the first time provides the means for determining and/or controlling the transition between junctional epithelium and supracrestal connective tissue in the supracrestal attached tissue at the placement site of a percutaneous dental device.

### Background

Percutaneous devices penetrate the body through a surgically created defect in the skin or mucosa to provide a conduit between an implanted medical device or artificial organ and the extracorporeal space. Percutaneous devices include e.g., catheters, prosthetic attachments, dental implants, feeding and tracheal tubes, and needle-type glucose sensors. However, breaking the skin barrier provides a route to infection and increases complications associated with wound non-closure.

Often, percutaneous devices also fail from mechanical irritation (avulsion) or epithelial downgrowth that forms a pocket around the implant (marsupialization), resulting in inflammation and increased susceptibility to infection. Mechanical forces also prevent an epidermal seal from forming, again increasing risk of infection.

To reduce percutaneous device-related infections antibiotics are applied topically, administered prophylactically, or incorporated into the device. Antibiotics, while clinically effective, raise concerns about the development of antibiotic-resistant strains.

Dermal integration is necessary to prevent infection, avulsion, and marsupialization, and to ensure the long-term performance of percutaneous devices. Several porous and textured biomaterials have been investigated to improve percutaneous device performance and longevity.

In general, while textured and porous surfaces encourage dermal integration, there are concerns that surfaces with irregular topographies may be more prone to harbouring bacteria. Bacteria may out-compete tissue cells in adhering to an implant surface, thus preventing tissue integration and promoting infection.

Percutaneous dental devices, such as dental implants and/or dental implant systems are often first of all optimized to facilitate biological fixation of the implants to the hard tissue, such as the jawbone. The key feature for such surfaces is the space afforded for osseous integration, improving the mechanical interlocking at the implant-surface/bone interface.

Traditionally, dental implants and/or dental implant systems are therefore designed to improve the osseointegration and enhance its stability. A major part of the dental implants currently used consist of titanium and/or its alloys, since titanium is biocompatible, has a sufficiently low elastic modulus and a relatively high strength. Osteointegrative properties can e.g., be reached by suitable treatment of the implant's surface. To this end, the titanium surface has conventionally been mechanically roughened by a subtractive removing process, e.g., sandblasting, grinding, or etching. Alternatively, the surface has been subjected to additive processes, e.g., coating with a textured surface. Surface topography of the dental implant or dental implant system is thus optimized for osseointegration and the part of the implant in contact with soft tissue is left smooth, so as to leave as little as possible anchoring/attachments holds for microbes. Also, it is believed that a smooth surface is advantageous for soft tissue reformation around the implant above the hard tissue line.

To further improve the placement success of dental implants, a dental surgical procedure can be employed that uses barrier membranes to direct the growth of new bone and gingival tissue at sites with insufficient volumes or dimensions of bone or gingiva for proper function, aesthetics, or prosthetic restoration, called guided bone regeneration (GBR). Guided bone regeneration typically refers to ridge augmentation or bone regenerative procedures; In analogy, guided tissue regeneration (GTR) typically refers to regeneration of periodontal attachment.

At present, guided bone regeneration is predominantly applied in the oral cavity to support new hard tissue growth on an alveolar ridge to allow stable placement of dental implants. When bone grafting is used in conjunction with sound surgical technique, guided bone regeneration is a reliable and validated procedure.

Aiming at an improved soft tissue integration of the implant system, EP-A-2161000 suggests an abutment comprising a soft tissue contact surface that is at least partially hydroxylated. In this context, improved soft tissue integration is explained by the loose connective tissue to become organized and replaced be newly formed collagen fibres.

Further, in WO2014195027A2, an abutment is described which comprises nanostructures formed on the soft tissue contact surface of the abutment basic body, said nanostructures extending in at least two dimensions to 200 nm at the most. The nanostructures form retention sites, allowing for an improved initial adherence of proteins of the cells of the surrounding soft tissue.

Still, all currently available percutaneous devices, such as dental implants and/or dental implant systems have a less than optimal soft tissue interaction, often displaying infection, avulsion, and marsupialization, in severe cases leading to periimplantitis.

There is currently no device on the marked that induces true physical soft tissue interaction with a dental implant. Suggested technologies to improve soft tissue interaction are based on a single surface or coating that should improve the interaction with soft tissue in general, irrespective of the fact that the supracrestal attached tissue, i.e., the "soft tissue" in the oral cavity adjacent to the implant, histologically comprises a complicated layering of different types of soft tissues.

## Summary of the invention

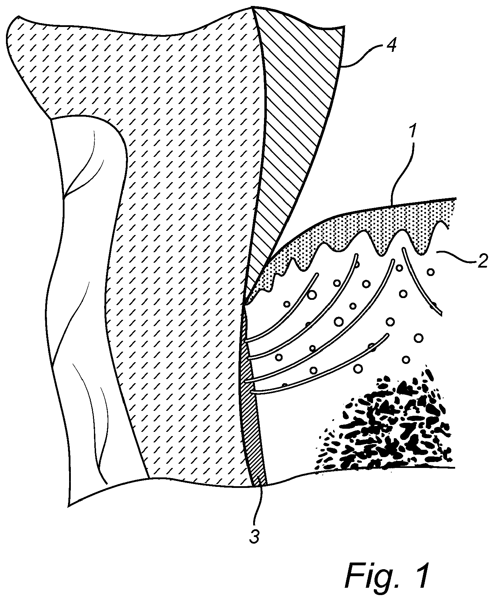

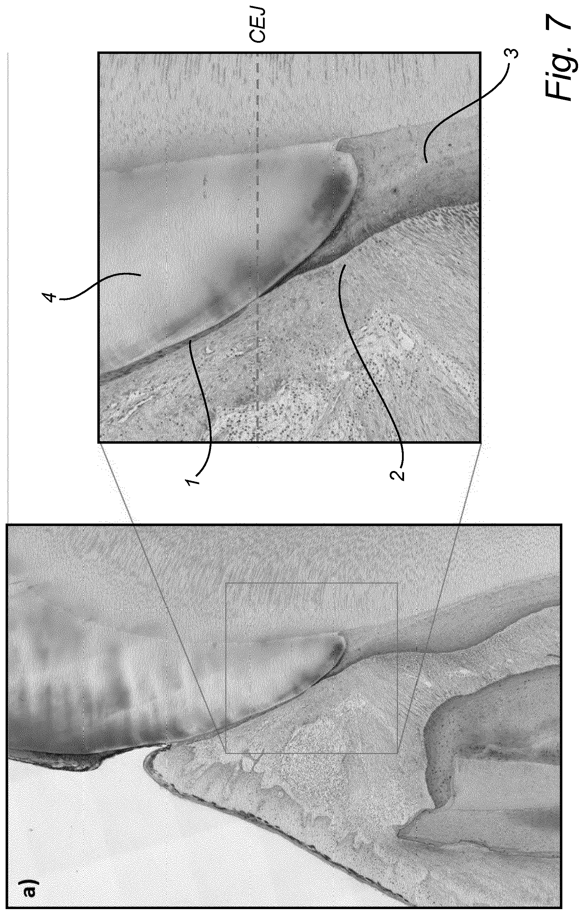

As can be seen in figure 1, the supracrestal attached tissue is not one single tissue type but comprises at least two histologically distinctive layers (epithelial- and connective tissue layer), such as, but not limited to, the junctional epithelium and the supracrestal attached tissue. Interestingly, it was by the current inventors found that, when looking at the interface between a natural tooth and the surrounding soft tissue, the epithelial layer always attaches to the enamel and the connective tissue always attaches to the tooth cementum (see figure 7).

Based on this observation it was hypothesized that the natural tooth's enamel surface is tailored for inducing formation of and/or attracting epithelial cells and the surface of the cementum is tailored for inducing formation and/or attracting connective tissue cells such as, but not limited to, fibroblasts and/or gingiva. In consequence, for an improved soft tissue healing and/or regeneration after the placement of a percutaneous dental device, the dental device should also have an at least biphasic surface in the region which is after placement in contact with the soft tissue and in which the surface of each of the at least two phases is tailored to induce formation and/or for attracting the epithelial tissue or the connective tissue of the supracrestal attached tissue, respectively and wherein the interphase between these two surfaces defines an *in situ* cemento-enamel junction (CEJ).

Concurrently, the current inventors found that the surface of a percutaneous dental device, such as a dental implant system, will induce and/or guide a histologically more natural healing and/or regeneration of the soft tissue layers surrounding the implantation and/or placement site, if its surface is at least biphasic in its soft tissue region, so as to be adapted to each of the at least two distinctive soft tissue layers of the supracrestal attached tissue, respectively. Thus, the region of the surface of the herein for the first time disclosed percutaneous and/or transmucosal dental device, implant and/or dental implant system, that is after implantation in contact, or at least closely adjacent to, the supracrestal soft tissue in the oral cavity, i.e., the soft tissue region of the device, effectively mimics the surface of a natural tooth and is thus optimized for histologically more natural soft tissue healing around the implantation and/or placement site. The herein for the first time disclosed dental device thus comprises an at least biphasic surface in the soft tissue region that enables the soft tissue around said implant to heal and/or regenerate in a more natural manner. A dental device according to the current invention thereby attracts a true, physical epithelial and connective tissue attachment.

The current invention therefore in one aspect relates to the use of a percutaneous/transmucosal dental device which comprises at least two surface regions with different surface-topographies in its soft-tissue region which mimic the surface of a natural tooth and which interphase and/or boundary forms an *in situ* cemento-enamel junction (CEJ), for improving soft tissue healing and/or soft tissue regeneration of the supracrestal epithelium and the supracrestal connective tissue at the placement site of the device.

Use of a percutaneous dental device according to the current invention in particular improves soft tissue healing and/or soft tissue regeneration of the junctional epithelium, the sulcular epithelium and/or the supracrestal connective tissue at the placement site of the device, i.e., a supracrestal attached tissue, or a tissue resembling it histologically, is regenerated at the placement site of said percutaneous dental device. In essence leading to a true, physical epithelial and connective tissue attachment.

Thus, in one aspect, the current invention relates to the use of a percutaneous dental device according to the current invention for improving, controlling and/or guiding regrowth and/or regeneration of a biological width at the placement site of said percutaneous dental device which is histologically correct and/or resembles the natural biological width of the patient at the placement site.

In consequence, the current invention in one aspect relates to the use of a percutaneous dental device according to the current invention for determining and/or controlling the transition between junctional epithelium and supracrestal connective tissue in the supracrestal attached tissue at the placement site of the device.

In a herein envisioned use of a percutaneous dental device according to the current invention, the regenerated soft tissues are in direct contact or at least in close proximity with the soft tissue region of the device.

The current invention relates to the use of a percutaneous dental device, wherein said percutaneous dental device comprises at least two surface regions with different surface-topography above and below the *in situ* cemento-enamel junction (CEJ) of the percutaneous dental device at their interphase, which are both in direct contact with soft tissue at the placement site. Through the herein for the first time described use of the percutaneous dental device according to the current invention, one of the at least two different soft tissue types is regenerated at one of the at least two distinct regions with different surface-topographies of the soft tissue region of said percutaneous dental device at the implantation site and another of the at least two different soft tissue types is regenerated at another of the at least two distinct regions with different surface-topography of the soft tissue region of said percutaneous dental device at the placement site. Thus, the at least two different soft tissue types are regenerated in the form of at least two distinct layers of soft tissue and each distinct soft tissue layer is in direct contact with only one of the distinct regions with different surface-topography of the soft tissue region of said percutaneous dental device.

Typically, the use of a percutaneous dental device according to the current invention leads to one of the at least two distinct layers of soft tissue being regenerated above the *in situ* cemento-enamel junction (CEJ) of the percutaneous dental device and the other below the *in situ* cemento-enamel junction (CEJ) of the percutaneous dental device. Healing and/or regeneration of epithelial tissue is induced and/or guided above the *in situ* CEJ of the percutaneous dental device and healing and/or regeneration of connective tissue is induced and/or guided below the *in situ* CEJ of the percutaneous dental device.

A percutaneous dental device according to the current invention mimics the surface-topography of a natural tooth and thus the placement of the *in situ* CEJ of the percutaneous dental device is typically determined in analogy to the CEJ of the surrounding tooth and/or teeth to the implant or placement site.

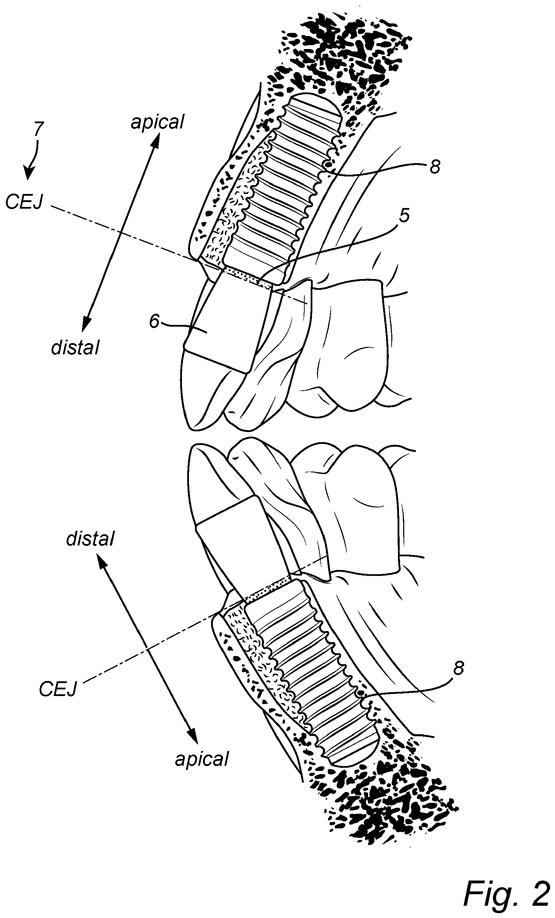

The current invention also relates to a percutaneous dental device with at least two distinct regions with different surface-topography in the soft tissue region of the device. In aspects, the soft tissue region of said percutaneous dental device has an apical region with a first surface-topography facing bone and a distal region with a second surface-topography facing the intra oral cavity (see figure 2).

The apical region and the distal region of the soft tissue region of the percutaneous dental device are divided by the *in situ* cemento-enamel junction (CEJ) of the percutaneous dental device. In the current context, the apical region is the region of the percutaneous dental device below the *in situ* cemento-enamel junction (CEJ), facing the bone tissue and the distal region is the region of the percutaneous dental device above the *in situ* cemento-enamel junction, (CEJ) facing the intra oral cavity.(see figure 2)

A percutaneous dental device of the current invention comprises at least two distinct regions with different surface-topographies in the soft tissue region of the device, wherein the surface roughness (Sa) of the region of the percutaneous dental device above the *in situ* cemento-enamel junction (CEJ) is at least 0.1 $\mu$m, such as at least 0.2 $\mu$m, less than the surface roughness (Sa) of the region of the percutaneous dental below the *in situ* cemento-enamel junction (CEJ).

In one embodiment, a percutaneous dental device is envisioned which comprises at least two distinct regions with different surface-topographies in the soft tissue region, characterized in that

a. the surface roughness (Sa) of the region of the percutaneous dental device which is in contact with soft tissue (epithelium) above the *in situ* cemento-enamel junction (CEJ) is no more than 0.4 $\mu$m, and
b. the surface roughness (Sa) of the of the region of the percutaneous dental device which is in contact with soft tissue (connective tissue) below the *in situ* cemento-enamel junction (CEJ) is between 0.2-0.8 $\mu$m, and

the surface roughness (Sa) of the region of the percutaneous dental device which is in contact with soft tissue (epithelium) above the *in situ* cemento-enamel junction (CEJ) is at least 0.1 $\mu$m, such as 0.2 $\mu$m less than the surface roughness (Sa) of the of the region of the percutaneous dental device which is in contact with soft tissue (connective tissue) below the *in situ* cemento-enamel junction (CEJ).

In embodiments, a percutaneous dental device of the current invention is characterized in that

c. the surface roughness (Sa) of the soft tissue region of the percutaneous dental device which is in contact with soft tissue (epithelium) above the *in situ* cemento-enamel junction (CEJ) is no more than (0.185 $\pm$ 0.07) $\mu$m (Sa), and
d. the surface roughness (Sa) of the of the soft tissue region of the percutaneous dental device which is in contact with soft tissue (connective tissue) below the *in situ* cemento-enamel junction (CEJ) is between 0.2-0.8 $\mu$m such as (0.477 $\pm$ 0.12) $\mu$m(Sa).

In aspects of the invention, a percutaneous dental device comprises a transitional region between the two surfaces above and below the *in situ* CEJ, wherein the surface roughness of the transitional region successively roughens from the surface roughness above the *in situ* CEJ of the percutaneous dental device to the surface roughness below the *in situ* CEJ of the percutaneous dental device.

The surface of the soft tissue region of a dental device according to the current invention is intended to mimic the surface of the soft tissue region of a natural tooth as closely as possible, thus the surface topography provided on the soft tissue region has a isotropic topography.

In aspects of the current invention, a percutaneous dental device is a dental implant system, comprising a dental implant, a crown and/or an abutment.

In aspects of the current invention, a percutaneous dental device comprises a soft tissue region with at least two distinct regions with different surface-topography which are located on the same part of the dental implant system. In other aspects, the at least two distinct regions of the soft tissue region with different surface-topography are located on at least two different parts of the dental implant system.

A percutaneous dental device according to the current invention can comprise a surface which comprises and/or consists of titanium, zirconium, titanium and/or zirconium alloys, dental ceramic, zirconia ceramic, full-contour zirconia (glazed), classical zirconia veneered with dental porcelain, yttrium-stabilized zirconium oxide (zirconia) in predominantly tetragonal form and/or hydroxyapatite coated zirconia-alumina composite. The surface of the percutaneous dental device can, e.g., be (sand-)blasted and/or etched to achieve the final roughness/topography.

The current invention further relates to a method for producing a percutaneous dental device, characterized in that the surface of the soft tissue section of the dental device is roughened to achieve

e. one surface roughness (Sa) of the region of the percutaneous dental device which is in contact with soft tissue (epithelium) above the in situ cemento-enamel junction (CEJ) of no more than $(0.185 \pm 0.07)$ $\mu$m (Sa), and

f. one surface roughness (Sa) of the region of the percutaneous dental device which is in contact with soft tissue (connective tissue) below the in situ cemento-enamel junction (CEJ) which is between 0.2-0.8 $\mu$m such as $(0.477 \pm 0.12)$ $\mu$m (Sa).

In such a method, the soft tissue section of the dental device can be roughened by any one or a combination of machining, application of a textured surface, employing spark erosive techniques, anodization techniques, plasma electrolytic oxidation, plasma etching, mechanical roughening, sintering, molding techniques, turning, milling, laser texturing, grinding, blasting with particles and acid etching. Alternatively, or in addition, the soft tissue section of the dental device can be topographically optimized by applying (a) growth factor(s), protein(s) and/or other material(s) that promote(s), enhance(s) and/or maintain(s) soft-tissue growth and/or regeneration.

In consequence, the current invention also relates to a percutaneous dental device produced by a method according to the current invention.

**Definitions**

**Percutaneous dental device**

In the current context, a percutaneous dental device is a transmucosal dental device, such as, but not limited to an implant, that is placed through the supracrestal attached tissue such that a permanent defect is created. Percutaneous medical or dental implants/devices are inserted into inner organs or other tissues by piercing through the skin and/or epidermal layer of the mucosa and then positioning the device into position by trespassing multiple layers of tissue. In the current context, the term "percutaneous device and/or implant" is used interchangeably with "transcutaneous device and/or implant" and "transmucosal implant and/or device".

**CEJ**

The cemento-enamel junction (CEJ).

**Peri-implantitis**

"Peri-implantitis" or "periimplantitis" is a dental term used to describe the destructive inflammatory process affecting the soft and hard tissues surrounding dental implants. Compared to mucositis, the definition of peri-implantitis includes bone loss. Among others, smoking, accumulation of bacterial biofilms (plaque), oral hygiene and periodontal status are influential factors. In the present context, the term "periodontal diseases" encompasses peri-implant infections, such as periimplantitis.

**Patient**

The term "patient" as used herein refers to any mammal. Examples of mammals are humans, farm animals and domestic animals.

**Osteointegration**

The term "osteointegration" herein interchangeably used with "osseointegration" designates the direct structural and functional connection between living bone and the surface of an implant/device. A good osteointegration means that the implant, after reaching a primary stability by screwing it into the bone, safely ossifies within a short healing time so that a permanent bond between implant and bone is obtained. In the past, much effort has been made to improve the osteointegrative properties of implants.

**CMF**

The abbreviation "CMF" herein stands for craniomaxillofacial complex, i.e., the anatomical area of the mouth, jaws, face, skull, as well as associated structures.

**SLA®**

In the present context, SLA® refers to a titanium surface which is produced by a large grit sand-blasting process with corundum particles that leads to a macro-roughness on the titanium surface. This is followed by a strong acid-etching bath with a mixture of $HCl/H_2SO_4$ at elevated temperature for several minutes. This produces 2-4 $\mu$m fine micro-pits superimposed on the rough-blasted surface. The surface is not micro-porous and therefore provides no enclosed volumes to reduce vulnerability to bacteria.

**CIS**

In the present context, Clean Implant Surface is abbreviated CIS.

***Enamel***

Tooth enamel is one of the four major tissues that make up the tooth in humans and many other animals, including some species of fish. It makes up the normally visible part of the tooth, covering the crown. The other major tissues are dentin, cementum, and dental pulp. Enamel is the hardest substance in the human body and contains the highest percentage of minerals (at 96%), with water and organic material composing the rest. The primary mineral is hydroxyapatite, which is a crystalline calcium phosphate.

**Periodontal phenotype**

The term "periodontal phenotype" herein means periodontal biotype.

**Supracrestal attachment**

"Supracrestal attachment" is in the present context interchangeably used with "the biological width".
It is to be understood that the terminology used herein is for the purpose of describing particular embodiments only and is not intended to limit the scope of the present invention which will be limited only by the appended claims.
It must be noted that as used herein and in the appended claims, the singular forms "a", "an", and "the" include plural references unless the context clearly dictates otherwise.

**Figure legends**

**Figure 1:** Schematic picture of the supracrestal connective tissue comprising epithelium (1) attached to the enamel (4) of the natural tooth and connective tissue (2) attached to the cementum (3) of the natural tooth.

**Figure 2:** Schematic picture of the placement of a dental device either in the upper or the lower jaw bone comprising a dental implant (8), illustrating the orientation of the two different surfaces of the soft-tissue region of the dental device below/apical (5) and above/distal (6) the cemento-enamel junction (CEJ) (7), which on the dental device is called the *in situ* CEJ.

**Figure 3:** Schematic picture of a dental device (right panel) which mimics the at least biphasic surface of the soft-tissue region of the natural tooth (left panel) above and below the CEJ (7)/the *in situ* CEJ (9). The soft-tissue region of the dental device below/apical (5) and above/distal (6) the *in situ* cemento-enamel junction (CEJ) (9). Dental implant (8).

**Figure 4:** Schematic representation of two different biphasic test abutments. The soft-tissue region of the dental device below/apical (5) and above/distal (6) the *in situ* cemento-enamel junction (CEJ) (9). Dental implant (8).

**Figure 5:** Implantation into the minipig mandible.

**Figure 6:** SEM image of the border between the soft-tissue region of the dental device below/apical (5) and above/distal (6) the *in situ* cemento-enamel junction (CEJ) (9). The machined surface (untreated surface) (6) is on the right side and the acid etched surface (5) is on the left. It can be seen that the manufacturing process led to a precise margin between the treated and untreated surface.

**Figure 7:** Histological section of a natural minipig tooth. Epithelium (1) attached to the enamel (4) of the natural tooth and connective tissue (2) attached to the cementum (3) of the natural tooth.

**Figure 8:** Histological section of a commercial smooth (machined) abutment. The whole abutment surface is covered with the epithelial layer (1).

**Figure 9:** Histological section of the customized bi-modal abutment. The top half of the abutment was machined, and the bottom half was roughened (2.5 mm from the implant shoulder). The soft-tissue region of the dental device below/apical (5) and above/distal (6) the *in situ* cemento-enamel junction (CEJ) (9), epithelial layer (1) and connective tissue (2).

**Figure 10:** Histological section of the customized abutment. The top 4 mm of the abutment was machined, and the bottom 1 mm was roughened. The soft-tissue region of the dental device below/apical (5) and above/distal (6) the *in situ* cemento-enamel junction (CEJ) (9), epithelial layer (1) and connective tissue (2).

**Figure 11** A and B: A ceramic abutment 2.5 mm, sample 1

**Figure 12** A and B and C: Ceramic abutment 2.5 mm, sample 1

**Figure 13** A and B: A ceramic abutment 2.5 mm, sample 2

**Figure 14** A and B and C: Ceramic abutment 2.5 mm, sample 2

**Figure 15** A and B: A Ceramic abutment 1.0 mm, sample 1

**Figure 16** A and B and C: Ceramic abutment 1.0 mm, sample 1

**Figure 17** A and B: A Ceramic abutment 1.0 mm, sample 2

**Figure 18** A and B and C: Ceramic abutment 1.0 mm, sample 2

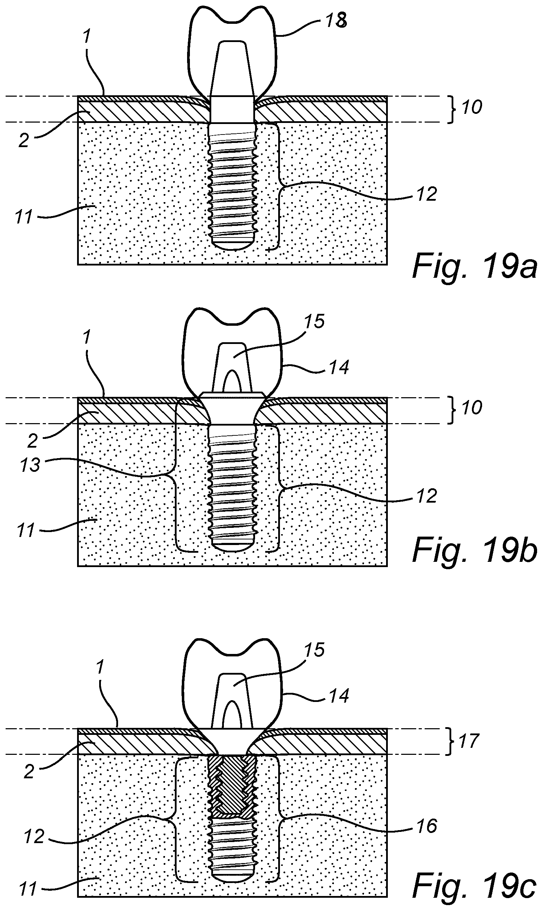

**Figure 19:** Fig.19a, schematic view of the placement of a one-piece dental implant (18). Epithelial layer (1) and connective tissue (2), soft tissue region of the implant (10), hard tissue region of the implant (12), hard tissue (11). Fig. 19b, schematic view of of the placement of a soft-tissue level dental implant (13). Epithelial layer (1) and connective tissue (2), soft tissue region of the implant (10), hard tissue region of the implant (12), hard tissue (11), abutment (15), crown (14). Fig.19c, schematic view of of the placement of a bone level dental implant (16). Epithelial layer (1) and connective tissue (2), soft tissue region of the implant (10), hard tissue region of the implant (12), hard tissue (11), abutment (15), crown (14), soft-tissue region of crown (17).

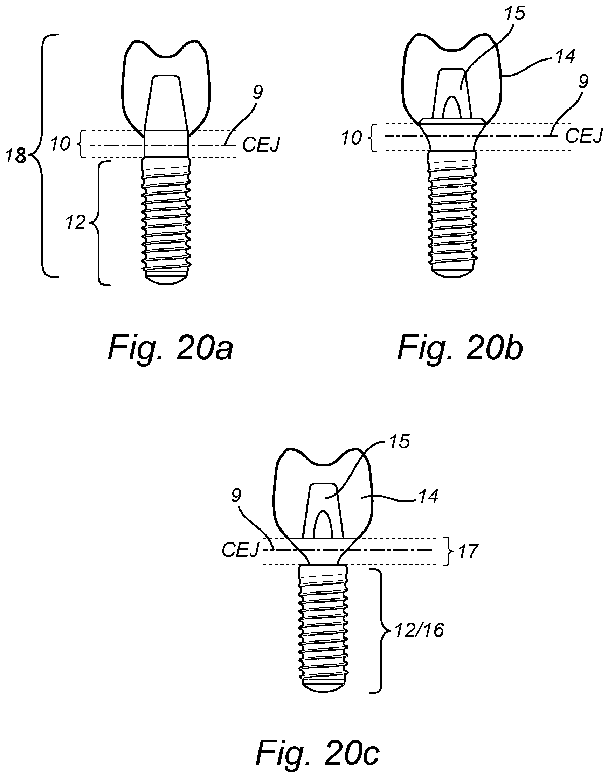

**Figure 20:** Fig.20a, schematic view of a one-piece dental implant (18). Soft tissue region of the implant (10), hard tissue region of the implant (12), the *in situ* cemento-enamel junction (CEJ) (9). Fig.20b, schematic view of a soft-tissue level dental implant. Soft tissue region of the implant (10), abutment (15), crown (14), the *in situ* cemento-enamel junction (CEJ) (9). Fig. 20c, schematic view of a bone level dental implant. Soft tissue region of the implant (10), hard tissue region of the implant (12/16), abutment (15), crown (14), soft-tissue region of crown (17), the *in situ* cemento-enamel junction (CEJ) (9).

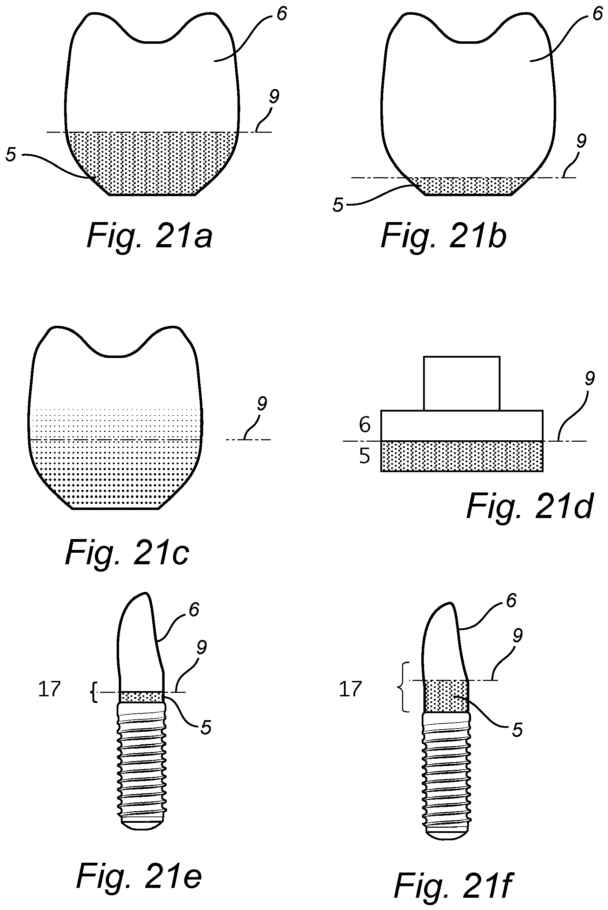

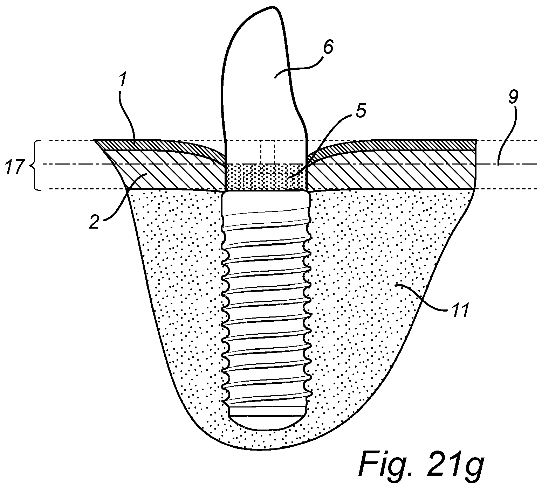

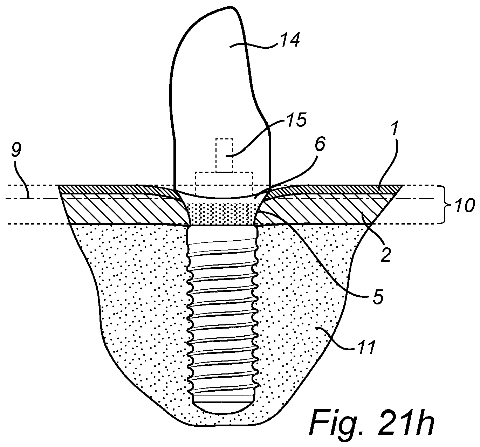

**Figure 21:** Fig.21a and b, schematic view of a biphasic crown. The soft-tissue region of the dental device below/apical (5) and above/distal (6) the *in situ* cemento-enamel junction (CEJ) (9). Fig.21c, schematic view of a crown, wherein the the soft-tissue region displays a surface topographic gradient from below/apical to above/distal across the *in situ* cemento-enamel junction (CEJ) (9). Fig.21d, schematic view of a biphasic abutment, the soft-tissue region of the dental device below/apical (5) and above/distal (6) the *in situ* cemento-enamel junction (CEJ) (9). Fig.21e and 21f, schematic view of a biphasic crown. The soft-tissue region of the dental device below/apical (5) and above/distal (6) the *in situ* cemento-enamel junction (CEJ) (9). Fi. 21g, schematic view of a placed dental device comprising a bone-level implant and a biphasic crown. The soft-tissue region of the dental device below/apical (5) and above/distal (6) the *in situ* cemento-enamel junction (CEJ) (9), soft-tissue region of crown (17), hard tissue (11). Fig 21h, schematic view of a placed dental device comprising soft-tissue level implant with a biphasic soft-tissue region. The soft-tissue region of the dental device below/apical (5) and above/distal (6) the *in situ* cemento-enamel junction (CEJ) (9), soft tissue region of the implant (10), abutment (15), crown (14).

**Detailed description of invention**

The present invention, for the first time, discloses a percutaneous dental device that comprises an at least biphasic surface in its soft-tissue region, i.e., the surface region of the dental device which is in contact with or which is adjacent to the soft tissue after the placement of the dental device in the patient's oral cavity, and wherein each of the at least two surface phases is tailored to optimize the interaction with the epithelial layer or the connective tissue, respectively.
A dental device according to the present invention therefore for the first time provides the means for improving soft tissue healing and/or soft tissue regeneration of the supracrestal epithelium and the supracrestal connective tissue at the placement site of the device.
The use of a dental device according to the present invention in essence facilitates histologically more natural healing, regeneration, regrowth and/or recovery of the soft tissue at the placement site of a percutaneous dental device.
The use of a dental device according to the present invention improves regrowth and/or regeneration of a histologically more correct and/or natural biological width at the placement site of said percutaneous dental device.
What is more, the use of a dental device according to the present invention for the first time makes it possible to determine and/or control the transition between junctional epithelium and supracrestal connective tissue in the supracrestal attached tissue at the placement site of the device.
The current invention thus relates to the use of, as well as to a percutaneous dental device with at least two distinct regions with different surface properties, such as with at least two different surface-topographies, in its soft-tissue region, characterized in that

a. the surface roughness (Sa) of the region of the percutaneous dental device which is in contact with and/or adjacent to the soft tissue (epithelium) above the *in situ* cemento-enamel junction (CEJ) is no more than (0.185 $\pm$ 0.07) $\mu$m (Sa), and

b. the surface roughness (Sa) of the of the region of the percutaneous dental device which is in contact with and/or adjacent to the soft tissue (connective tissue) below the *in situ* cemento-enamel junction (CEJ) is between 0.2-0.8 $\mu$m such as (0.477 $\pm$ 0.12) $\mu$m (Sa).

**Periodontium**

The periodontium is the assembly of specialized tissues that both surround and support the teeth, maintaining them in the maxillary and mandibular bones. The tissues of the periodontium combine to form an active, dynamic group of tissues. The alveolar bone is surrounded for the most part by the subepithelial connective tissue of the gingiva, which in turn is covered by the various characteristic gingival epithelia. The cementum overlaying the tooth root is attached to the adjacent cortical surface of the alveolar bone by the alveolar crest, horizontal and oblique fibres of the periodontal ligament.
It consists of four principal components, namely:

1. Gingiva
2. Periodontal ligament (PDL)
3. Cementum
4. Alveolar bone proper

Each of these components is distinct in location, architecture, and biochemical properties, which adapt during the life of the structure. For example, as teeth respond to forces or migrate medially, bone resorbs on the pressure side and is added on the tension side. Cementum similarly adapts to wear on the occlusal surfaces of the teeth by apical deposition. The periodontal ligament in itself is an area of high turnover that allows the tooth not only to be suspended in the alveolar bone but also to respond to the forces. Thus, although seemingly static and having functions of their own, all of these components function as a single unit.

The attachment of the tooth to the surrounding and supporting structures (bone) is accomplished through the cementum of the tooth, periodontal ligaments and the alveolar bone. The junctional epithelium is located at the base of the sulcus. It is adjacent to the tooth and is that part of the gingiva that attaches the connective tissue to the tooth. The root of the tooth (cementum) is attached to the underlying bone by a series of periodontal fibers that make up the periodontal ligament and allow for minor movement of the tooth in the socket without damage to the tooth or the underlying structures. These fibers are classified apical, oblique, horizontal, alveolar crest and interradicular fibers.

*Gingiva*

The makeup of the gingival tissue varies according to its location and function. There are two types of gingivae and several important anatomic regions.

1. Alveolar mucosa - The area of tissue beyond the mucogingival junction. It seems less firmly attached and redder than the attached gingiva. It is non-keratinized and provides a softer and more flexible area for the movement of the cheeks and lips.
2. Attached gingiva - This tissue is adjacent to the free gingiva and is keratinized and firmly attached to the bone structure. It can range from 3-12 mm in height.
3. Free gingiva - This tissue is not attached and forms a collar around the tooth. The trough around the tooth is called the sulcus and its depth is normally 1-3 mm. It is lined with sulcular epithelium and attached to the tooth at its base by the epithelial attachment. The sulcular epithelium is that epithelium which lines the gingival sulcus. It is apically bounded by the junctional epithelium and meets the epithelium of the oral cavity at the height of the free gingival margin.
4. Gingival margin - The border region of the gingiva that touches the tooth.
5. Junctional epithelium - The part of the gingiva that attaches the connective tissue to the tooth. It is located at the base of the sulcus.
6. Interdental papillae - The region of gingival tissue that fills the space between adjacent teeth. In a healthy mouth this is usually knife-edged and fills the interdental space.
7. Muco-gingival junction - The scalloped line that divides the attached gingiva from the alveolar mucosa.

*Periodontal ligament (PDL)*

The periodontal ligament, commonly abbreviated as the PDL, is a group of specialized connective tissue fibres that essentially attach a tooth to the alveolar bone within which it sits. It inserts into root cementum one side and onto alveolar bone on the other.

The PDL consists of principal fibres, loose connective tissue, blast and clast cells, oxytalan fibres and Cell Rest of Malassez.

The PDL is a part of the periodontium that provides for the attachment of the teeth to the surrounding alveolar bone by way of the cementum.

*Cementum*

The cementum is a specialized calcified substance covering the root of a tooth. The cementum is the part of the periodontium that attaches the teeth to the alveolar bone by anchoring the periodontal ligament.

Sharpey fibres are part of the principal collagenous fibres of the periodontal ligament embedded in the cementum and alveolar bone to attach the tooth to the alveolus.

If cementum can be observed on teeth, it can imply that the roots are exposed, showing that the clinical crown (the exposed part of the tooth) is bigger than the anatomical crown (the surface of the tooth covered by enamel). This is often due to gingival recession and may be an indication of periodontal disease.

**Supracrestal attached tissue**

The supracrestal attached tissues are histologically composed of the junctional epithelium and supracrestal connective tissue attachment. Infringement within the supracrestal connective tissue attachment is associated with inflammation and loss of periodontal supporting tissue.

As shown in the experimental section, epithelial tissue and connective tissue can easily be differentiated by ocular histological inspection.

There are two types of gingivae that are clearly recognizable, and they are known as the marginal gingiva that is mobile, and the attached gingiva.

The current invention relates to the use of a percutaneous dental device which comprises at least two surface regions with different surface-topographies in the soft-tissue region of the device, for improving soft tissue healing and/or soft tissue regeneration of the supracrestal epithelium and the supracrestal connective tissue at the placement site of the device.

Such a use improves in particular the soft tissue healing and/or soft tissue regeneration of the junctional epithelium, the sulcular epithelium and the supracrestal connective tissue at the placement site of the device, so that the supracrestal attached tissue is regenerated or at least a tissue is regenerated that histologically closely resembles the supracrestal attached tissue at the placement site of said percutaneous dental device.

**Biological width**

The natural barrier that develops around the teeth and dental implants to protect the alveolar bone from disease and infection is known as the biologic width. As such, biologic width is vital for the preservation of periodontal health and removal of irritation that could damage the periodontium.

The biologic width can be identified by probing under local anaesthesia to the bone level (referred to as "sounding to bone") and subtracting the sulcus depth from the resulting measurement. If this distance is less than 2 mm at one or more locations, a diagnosis of biologic width violation can be confirmed. Increased probing depths have been associated with increased risk of peri-implant disease and implant failure.

The biologic width is unique to each patient and will typically vary from about 0.75-4.3 mm. The mean biologic width is 2.04 mm. Of this, the connective tissue attachment is 1.07 mm and about 0.97 mm is occupied by the junctional epithelium.

Use of a percutaneous dental device according to the current invention improves regrowth and/or regeneration of a histologically correct biological width at the placement site of said percutaneous dental device.

Since, as discussed above, the biologic width is unique to each patient, an improved regrowth of the biological width needs to be determined in relation to the natural biological width of the patient and can thus be from about 0.75-4.3 mm. As a rule, the use of a percutaneous dental device according to the current invention improves regrowth and/or regeneration of a histologically correct biological width at the placement site of said percutaneous dental device to a mean value of more than 2 mm.

**Cemento-enamel junction (CEJ)**

In the natural tooth, the cementum joins the enamel to form the cemento-enamel junction (CEJ), which is referred to as the cervical line.

The cemento-enamel junction, in the current context abbreviated as CEJ, is a slightly visible anatomical border identified on a tooth. It is the location where the enamel, which covers the anatomical crown of a tooth, and the cementum, which covers the anatomical root of a tooth, meet.

The cemento-enamel junction (CEJ) represents the anatomic limit between the crown and root surface and is defined as the area of union of the cementum and enamel at the cervical region of the tooth.

**_In situ_ cemento-enamel junction (CEJ) of the percutaneous dental device**

A percutaneous dental device of the current invention comprises an artificial CEJ, a limit where two distinct surface regions of its soft tissue region with different surface properties meet. I.e., the different surface properties of the soft tissue region of the dental device mimic the different surface properties of a natural tooth, thereby effectively mimicking its biological effect on the surrounding soft tissues, in particular on the supracrestal attached tissue at the placement site of the device. In the current context, the artificial CEJ of the dental device is defined as _"in situ_ CEJ" or _"in situ_ CEJ of the dental device".

The placement of the *in situ* CEJ in the soft tissue region of the percutaneous dental device according to the current invention is preferably determined in analogy to the CEJ of the adjacent or surrounding tooth and/or teeth to the implant site or placement site. Alternatively, it can also be designed to not align, or to align with the CEJ of the adjacent or surrounding tooth only partly and/or teeth.

The *in situ* CEJ can be placed so that the soft tissue region of the dental device is divided into equal parts with different surface properties, i.e., 50/50, or it can be placed so that the soft tissue region is divided into any other parts, such as between 1/99-99/1, such as approximately into 10/90, 20/80, 30/70, 40/60, 60/40, 70/30, 80/20 or 90/10.

In this way, a percutaneous dental device according to the current invention can be designed to mimic the surface-properties of a natural tooth in its soft tissue region to achieve determining and/or controlling the transition between junctional epithelium and supracrestal connective tissue in the supracrestal attached tissue at the placement site of the device.

In aspects of the current invention, a percutaneous dental device comprises a transitional region between the two surfaces above and below the *in situ* CEJ, wherein the surface of the transitional region successively changes from the properties of the surface above the *in situ* CEJ of the percutaneous dental device to the surface properties below the *in situ* CEJ of the percutaneous dental device.

**Guided soft tissue regeneration**

Guided tissue regeneration (GTR) is a treatment principle in surgical therapy. It implies that only those types of cells with the capacity of producing regeneration invade a surgically treated lesion during healing.

Guided bone regeneration (GBR) typically refers to ridge augmentation or bone regenerative procedures; guided tissue regeneration (GTR) typically refers to regeneration of periodontal attachment.

In the art, the treatment principle, both GBR and GTR, refer to dental surgical procedures that use barrier membranes to direct the growth of new bone and gingival tissue at sites with insufficient volumes or dimensions of bone or gingiva for proper function, aesthetics, or prosthetic restoration.

In the present context, guided soft tissue regeneration (GTR) is achieved by presenting the soft tissue surrounding the implantation and/or placement site with a region of soft tissue attractive properties that is different above and below the *in situ* CEJ, thus mimicking the properties of the natural tooth and thus only attracting a certain type of soft tissue, or at least preferably attracting a certain type of soft tissue over other types of soft tissue.

It is possible to combine the herein for the first time presented GTR treatment principle with the traditional dental surgical procedures that use barrier membranes to direct the growth of new bone and gingival tissue at sites with insufficient volumes or dimensions of bone or gingiva.

In the present context, the phrase Guided Tissue Regeneration (GTR) is used to describe the regeneration of histologically more natural soft tissue surrounding the placement site of the percutaneous dental device, i.e., regeneration of the supracrestal attached tissue. In the present context, regeneration of the soft tissue is not guided by a surgically introduced membrane but induced by adapting the soft-tissue region of the surface of the dental device in such a way that it selectively attracts the histologically correct soft tissue below and above the CEJ.

Thus, a dental device according to the current invention provides transmucosal surface properties that facilitate a regeneration and/or healing which results in a more natural soft tissue surrounding the implantation site, wherein both regenerated epithelium and regenerated connective tissue are in contact with the soft-tissue region of the dental device. This ensures attachment of both soft tissue types by offering tailored surfaces for both types of tissues, i.e., for both epithelial and connective soft tissue types, respectively.

**Inducing histologically more natural soft tissue healing and/or regeneration**

The current invention is based on the finding that a dental device that mimics the surface properties of a natural tooth will induce, guide and/or control the restoration of a histologically more natural or near natural soft tissue surrounding the placement and/or implantation site.

Without wishing to be limited to a scientific theory, the surrounding soft tissue is seemingly stimulated to grow back into the original layers of tissue arrangement by being selectively attracted to the different properties of the distinct phases of the soft-tissue region of the dental device that resemble the structuring of the natural tooth's different regions.

In the current context, the phrase "Histologically correct" or "histologically more natural" is used to indicate that the regenerated and/or regrown soft tissue mimics the natural soft tissue structure before the dental device was placed and/or implanted at the placement and/or implantation site. In particular, it mimics the original histology of the supracrestal attached tissue. The supracrestal dental device of the current invention is designed to attract a true, physical connective tissue attachment. It is to be understood that a complete regeneration to an absolute resemblance is not achievable even with the herein for the first time described new use, since the placing of a percutaneous device into and through the original soft tissue layers will of course disturb and/or distort the natural tissue and create a wound-like structure.

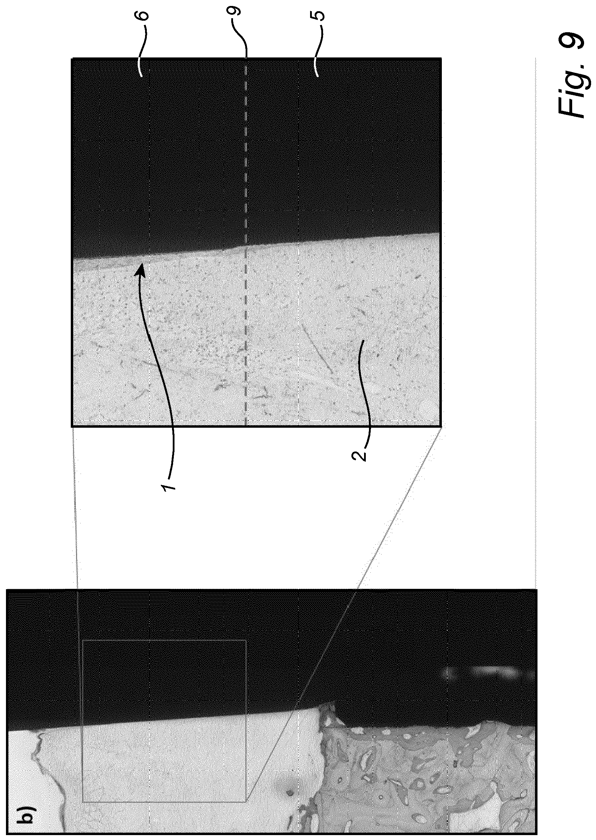

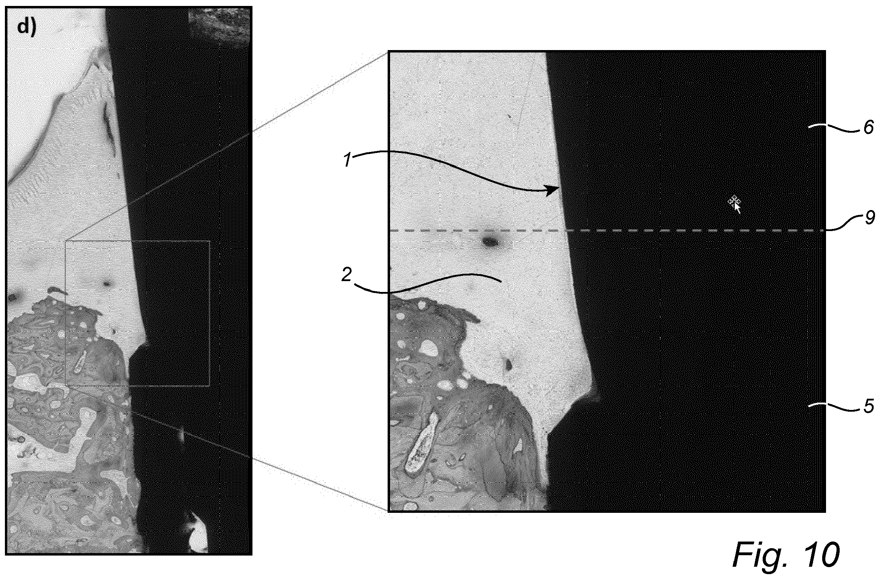

Thus, the new tissue is of course only a replacement tissue and not the actual original tissue. Still, with the new use of the current invention, the replacement tissue at the placement and/or implantation site mimics the natural soft tissue structure of the original tissue, i.e., the regrown and/or regenerated tissue comprises both epithelial tissue and connective tissue in distinct tissue layers, the layers meeting at the *in situ* CEJ (see figures 9 and 10).

Thus, the current invention relates to a use of a percutaneous dental device according to the current invention, wherein the regenerated soft tissues are in direct contact with the device at the soft tissue region of the device.

Since a percutaneous dental device of the current invention comprises at least two surface regions with different surface-topography above and below the in situ cemento-enamel junction (CEJ) in the soft tissue-region of the percutaneous dental device, both surface regions will at least partially come in direct contact with soft tissue at the implantation and/or placement site.

Use of a percutaneous dental device according to the current invention leads to one of the at least two different soft tissue types being attracted to and/or regenerated at one of the at least two distinct regions of the device's soft-tissue region at the implantation and/or placement site and another of the at least two different soft tissue types being attracted to and/or regenerated at another of the at least two distinct regions of the device's soft-tissue region at the implantation site and/or placement site.

The at least two different soft tissue types are regenerated in the form of at least two distinct layers of soft tissue and each distinct soft tissue layer is in direct contact with only one of the distinct regions of the soft-tissue section of the percutaneous dental device.

Each of the at least two distinct layers of soft tissue in contact with the percutaneous dental device is regenerated either above the *in situ* cemento-enamel junction (CEJ) of the percutaneous dental device or below the *in situ* cemento-enamel junction (CEJ) of the percutaneous dental device.

Thus, use of a percutaneous dental device according to the current invention will lead to improved healing and/or regeneration of epithelial tissue above the *in situ* CEJ of the percutaneous dental device and improved healing and/or regeneration of connective tissue below the *in situ* CEJ of the percutaneous dental device.

What is more, the current invention thus for the first time provides the means for determining and/or controlling the transition between junctional epithelium and supracrestal connective tissue in the supracrestal attached tissue at the placement site of a percutaneous dental device by controlling the location and/or level of the *in situ* CEJ on the soft tissue surface of the percutaneous dental device.

**Methods of measuring improved soft tissue healing at implant site**

As can be seen in the experimental section, improved soft tissue healing can easily be detected with histological analysis, such as with ocular inspection and/or SEM imaging.

**Wound healing in the soft tissue at implantation site**

Soft tissue healing is defined as the replacement of destroyed tissue by living tissue in the body. This process consists of two parts - regeneration and repair. There are no defined boundaries between stages as the wound healing response "transitions" into the next stage of healing.

Oral wounds follow a similar pattern. The tissue specificities of the gingival, alveolar and palatal mucosa appear to be innately and not necessarily functionally determined. The granulation tissue originating from the periodontal ligament or from connective tissue originally covered by keratinized epithelium has the potential to induce keratinization. However, it also appears that deep palatal connective tissue may not have the same potential to induce keratinization as the palatal connective tissue originating from an immediately subepithelial area. Epithelial healing following non-surgical and surgical periodontal therapy appears to be completed after a period of 7-14 days. Structural integrity of a maturing wound between a denuded root surface and a soft tissue flap is achieved at approximately 14-days post-surgery. The formation of the biological width and maturation of the barrier function around transmucosal implants requires 6-8 weeks of healing.

At the implant-soft tissue interface, the creation of epithelial and connective tissue seals is essential to inhibit bacterial infiltration, prevent the development of peri-implant diseases, and ensure a long-term prognosis of dental implants.

The soft tissue seal around the dental implant is formed as a result of the wound healing process that starts immediately after the implant/abutment surgery when the blood proteins adsorb on the implant or abutment surfaces. This initial interaction may influence clot formation at the peri-implant wound site, which induces an inflammatory process and leads to tissue formation.

Typical healing in dentistry refers to periodontal tissue healing which occurs differently in regenerative versus resective procedures and in the latter, in first intention versus secondary intention closure. Regenerative procedures aim to produce new periodontal tissue as in guided tissue regeneration (GTR), while the aim of respective procedures is to remodel the existent periodontal tissues in order to eliminate the pockets and to facilitate oral hygiene maintenance.

In first intention procedures, soft tissue flaps are repositioned to perfectly cover the underlying hard tissue, while, in secondary intention procedures, surgical flaps are placed in close proximity to the remodelled hard tissue to allow best new soft tissue attachment.

In dental implant surgery without bone augmentation procedures soft tissue healing differs from the standard 2-stage procedures in which soft tissues completely cover the surgical bed to 1-stage procedures in which soft tissues are closely adapted around the implant neck which is left outside the surgical wound with a healing abutment or a provisional prosthesis. In this last condition, soft tissue healing is similar to that of the second stage of standard implant surgery performed for healing abutment connection in which wound margins are closely approximated to the abutment. In every case, a blood clot immediately fills the space between the implant cover screw or implant abutment/neck and the adjacent soft tissues, so that bleeding occurs on flap palpation through wound incisions or at the abutment-tissue margin interface during the first 2-3 days. In completely covered implants, first intention soft tissue healing occurs in about 1-2 weeks, while in all other cases the connective tissue aspect of the flap at the abutment-flap interface is visible for 2-3 days, at which point complete epithelialization of the abutment facing soft tissue occurs and, after the first 2 weeks peri-implant epithelium starts to migrate apically. A 3-4 mm high mature soft tissue barrier adjacent to titanium implants with about 60% of a new epithelium attachment is completely formed within 6-8 weeks and remains stable for at least 12-15 months, possibly reaching a greater final width in procedures different from conventional 2-stage procedures with implant insertion in healed sites.

In conclusion, oral soft tissue healing at teeth, implants and the edentulous ridge follows the same phases as skin wound healing.

In contrast to after placement of conventional dental devices, i.e., devices that have a uniform surface in its soft-tissue region, such as traditional dental implant systems with a single-phase surface in the soft-tissue region, whereafter the established peri-implant soft connective tissue resembles a scar tissue in composition, fibre orientation, and vasculature, use of a dental device according to the current invention leads to a regrowth of a histologically more natural peri-implant soft connective tissue as well as a histologically more natural peri-implant junctional epithelium.

**Dental device**

A percutaneous dental device according to the current invention can be a dental implant system. A dental implant system can in the current context comprise a dental implant, a crown and/or an abutment.

The at least two distinct regions with different surface-topographies of the soft-tissue region of the percutaneous dental device can be located on the same part of the dental implant system, or on at least two different parts of the dental implant system.

A percutaneous dental device according to the current invention such as a dental implant system, comprises and/or consists of titanium, zirconium, or titanium and/or zirconium alloys, dental ceramic, zirconia ceramic, full-contour zirconia (glazed), classical zirconia veneered with dental porcelain, yttrium-stabilized zirconium oxide (zirconia) in predominantly tetragonal form and/or hydroxyapatite coated zirconia-alumina composite.

When using a titanium alloy, this is preferably a titanium zirconium (TiZr) alloy, typically comprising Zr in an amount of 13 to 17%. Alternatively, a titanium aluminium vanadium alloy, specifically Ti-6Al-4V (TAV), or a titanium aluminium niobium alloy, specifically Ti-6Al-7Nb (TAN), can be used as a titanium alloy suitable for the purpose of the present invention. With regard to the use of titanium or a titanium alloy for an abutment basic body, it is further preferred that the nanostructures comprise titanium hydride and/or titanium oxide. In case the nanostructures comprise titanium hydride, they typically comprise $TiH_2$, whereas in case the nanostructures comprise titanium oxide, they typically comprise $TiO_2$.

A dental device can have a core of a high-strength material such as zirconia, titanium or alloys thereof, said core being coated with a ceramic material which can be chemically and/or mechanically processed. (See e.g., WO-A-2005/027771 and EP-A-0870478).

The term "ceramic material" encompasses any type of ceramic such as ceramics based on zirconia, alumina, silica or mixtures thereof, optionally comprising further constituents. Preferably, the ceramic material is based on zirconia, more preferably yttria-stabilized zirconia. This material has the advantage of a high fracture toughness and bending strength.

An example of an yttria-stabilized zirconia ceramic is described by the international standards ASTM F 1873 and ISO 13356, specifying the characteristics of, and a corresponding test method for, a biocompatible and biostable ceramic bone-substitute material based on yttria-stabilized tetragonal zirconia (yttria tetragonal zirconia polycrystals, Y-TZP) for use as material for surgical implants. Specific examples of an yttria-stabilized zirconia are ZrO2-TZP/TZP-A Bio-HIP® (ZrO2) Bioceramic available from Metoxit AG, Switzerland, and ZIOLOX® available from CeramTec AG, Plochingen, Germany. Both materials offer a particularly high mechanical stability and strength, in particular when prepared by hot isostatic pressing or by sintering with subsequent hot isostatic densification. A detailed description of the ZrO2-TZP/TZP-A Bio-HIP® (ZrO2) Bioceramic is given in US-B-6,165,925.

In particular, the composition of the yttria-stabilized zirconia comprises about 4.5 to about 5.5 weight-% of Y2O3 and less than about 5 weight-% of HfO2, the total amount of ZrO2, Y2O3 and HfO2 being more than about 99.0 weight-%.

In one aspect, the surface of the percutaneous dental device of the current invention comprises a conventional dental ceramic, full-contour zirconia (glazed) and/or classical zirconia veneered with dental porcelain.

## Dental implant system

In the present context, the term "dental implant system" includes the actual implant as well as abutment and/or crown, the at least biphasic surface topographies are implemented on any of the individual parts of the dental implant system, depending on which part or parts of the implant system is/are in contact with or closely adjacent to the soft tissue at the implantation site, i.e. depending on which part or parts of the implant system comprise the soft tissue region of the dental device/dental implant system.

## Dental implant

In general, a dental implant of the present invention is a one-part or a two-part dental implant comprising an anchoring part for anchoring the implant within the jawbone and a mounting part for receiving a prosthetic build-up construction.

Two-part systems are known in the art. They can either be inserted subgingivally or transgingivally. They are typically distinguished as either bone-level or soft-tissue level implants.

According to the (closed) subgingival system, the anchoring part of the dental implant is embedded until the bone ridge so that the mucoperiost cover can be seen above the implant. At the end of the primary healing phase, the mounting part and the desired bridge or crown is then applied in a second operation.

According to the (open) transgingival system, the anchoring part of the implant is sunk in up to about 3 mm of the bone ridge at mucosal level, thus avoiding a secondary operation. The wound edges can be directly adapted to the implant neck portion, thereby effecting a primary soft tissue closure to the implant. Then, the desired bridge or crown is screwed or cemented onto the mounting part of the implant, generally using an intermediate abutment.

Transgingivally applied dental implants are preferred. When implanting such an implant, the soft tissue attachment during the healing process is not disturbed by a secondary operation such as occurring with systems that heal with covered mucous lining.

For example, the dental implant of the present invention can be a two-part, transgingivally applied implant analog to the titanium implant marketed by Institut Straumann AG, Basel/Switzerland, under the tradename "Straumann Dental Implant System".

In one aspect, the two-part dental implant preferably has an anchoring and a mounting part which are made of the same material. Thus, the anchoring part and the mounting part have the same thermal coefficient of expansion, allowing them to be closely fitted and avoiding the formation of gaps between them.

Alternatively, the dental implant of the present invention may also be a one-part dental implant. The mechanical stability of a one-part dental implant is generally higher than the one of a multi-part system. In combination with the high strength of the material used, the one-part dental implant of the present invention has thus a particularly high mechanical stability. The one-part dental implant has the additional advantage that there are no interstices and thus no starting points for the formation of bacteria which may cause periodontitis or gingivitis.

The dental implant of the present invention can be directly ground, allowing it to be adapted to further elements to be mounted in a simple way.

In one aspect, the dental implant of the present invention can either be made fully of a ceramic material or can have a core made of another material, such as a metal, for example titanium or an alloy thereof, or another ceramic material.

The present invention encompasses dental implants of which the whole surface is made of a ceramic material and dental implants of which only a part of the surface is made of a ceramic material.

The dental implant of the present invention may be an implant of which the bone tissue contacting region of the anchorage part's surface has a topography that increases osteointegration. Typically, such a bone contacting region has a Sa of around 1.2 $\mu$m.

It is further preferred that the anchoring part comprises a threaded section. Thereby, the implant can be implanted with the necessary primary stability so that subsequently to the implantation directly a primary treatment is made possible by applying a temporary measure. The surface of the threaded section preferably has a topography that increases osteointegration.

In a presently preferred embodiment, the surface of soft-tissue region of the implant has the properties according to the present invention. It has been found that when using a dental implant which in the soft tissue contacting region has the bi-phasic topography according to the present invention, the blood coagulum is stabilized which further accelerates the healing process.

### Abutment

In the current context, an abutment is an intermediate, i.e., a secondary part used for mounting a suprastructure onto a dental implant, such as a bridge or a crown, as it is the case in a "two-part implant system" or "multi-part implant system".

### Crown

In the current context, a crown is a fixed prosthetic dental restoration which caps or encircles a tooth or dental implant. In the current context, the term "a crown" is used to denote any suprastructure, such as, but not limited to comprising a bridge. The term "suprastructure" relates to the prosthetic element of the dental restoration, and in particular relates to a crown or bridge.

The at least biphasic surface described herein can be located on different parts of the implant system, depending on which of the parts is/are in contact with the soft tissue surrounding the placement and/or implantation site, e.g., on the implant, the crown-tulip part of the implant, the tulip part of the implant, the crown, the abutment and/or the final abutment.

### Surfaces

In order to mimic the natural surface of the tooth and thus to offer an optimal interface between a dental device and the surrounding soft tissue, a dental device of the current invention has an at least biphasic surface in the soft tissue region of its surface. I.e., its soft-tissue region comprises at least two sperate regions with different surface topographies which are divided by the *in situ* CEJ. After implantation, regeneration and/or healing of the supracrestal soft tissue surrounding the implantation and /or placement site, at least parts of the two separate regions of the soft-tissue region of the dental device will be in direct contact or at least in close proximity with the surrounding soft tissue, i.e., with the supracrestal epithelium and the supracrestal connective tissue at the placement site of the device.

A dental device according to the current invention comprises a soft-tissue region.

The dental device of the current invention can comprise a surface region that is in contact with soft tissue and a surface region that is in contact with hard tissue, such as bone.

Thus, in one embodiment of the invention, the dental device comprises a soft-tissue region and a hard-tissue region.

In one embodiment of the invention, the dental device does not comprise a hard-tissue region.

### Soft-tissue region

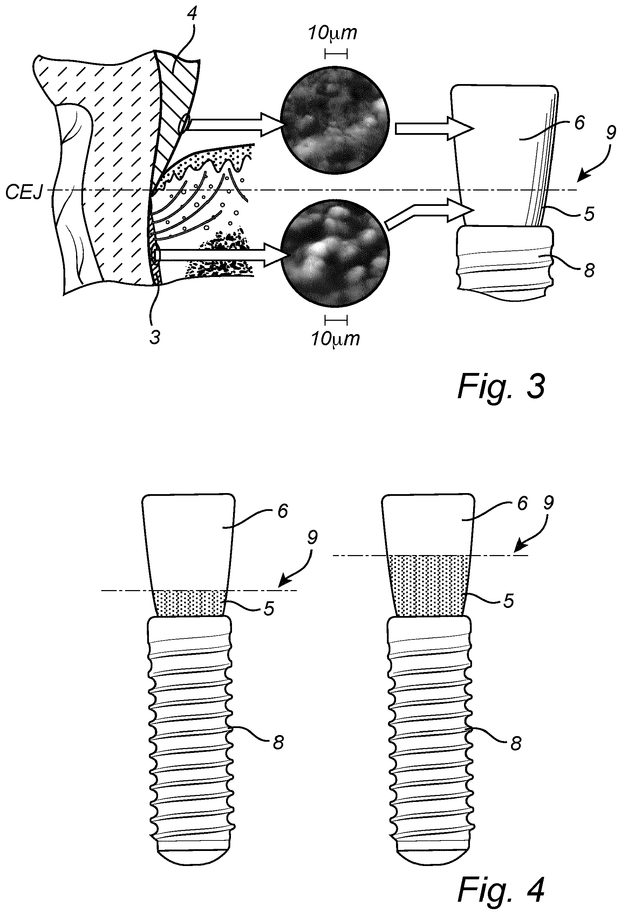

The current invention relates to a percutaneous dental device with at least two distinct regions with different surface-topography in the soft tissue region. Figure 4 shows a schematic view of the soft-tissue region of a dental device according to the current invention. The soft-tissue region comprises at least two separate regions with different surface topographies which are divided/separated by the *in situ* CEJ of the dental device. I.e., two of the at least two distinct surface regions in the soft-tissue region of the dental device connect at the *in situ* CEJ of the dental device.

After implantation, regeneration and/or healing of the supracrestal soft tissue surrounding the dental device at the implantation site and/or placement site, at least parts of the two distinct surface regions of the soft-tissue region of the dental device will be in direct contact or at least in close proximity with the surrounding soft tissue, i.e., with the supracrestal epithelium and the supracrestal connective tissue at the placement site of the device.

In the current context, the soft-tissue region of the dental device is also referred to as "soft tissue contact surface" or "soft tissue section".

In the current invention, the surface of soft tissue region of the dental device is at least biphasic/bioregional, i.e., it has at least two distinct surface regions and/or phases that have different surface-properties, such as, but not limited to at least two different surface-topographies. The at least two different phases/regions connect at the *in situ* CEJ of the dental device.

The at least biphasic surfaces of the dental implant systems of the current invention facilitate improved soft tissue healing by promoting primary wound coverage, angiogenesis, space creation and maintenance, and clot stability, compared to traditional dental implant systems with a single-phase surface.

As is shown in the experimental part, the adhesion of the different soft tissue cell type layers is histologically more correct and/or natural on the dental implant systems of the current invention, compared to traditional dental implant systems with a single-phase surface in the soft-tissue region.

As can be seen in figure 2, the soft tissue region of a percutaneous dental device according to the current invention has an apical region with a first surface-topography and a distal region with a second surface-topography.

The apical region and the distal region are divided by the *in situ* CEJ of the percutaneous dental device. I.e., the apical region and the distal region connect at the *in situ* CEJ of the percutaneous dental device.

In the current context, the apical region is the region of the percutaneous dental device below the *in situ* cemento-enamel junction (CEJ) and the distal region is the region of the percutaneous dental device above the *in situ* cemento-enamel junction (CEJ).

In the current context, the terms "distal region" ad coronal region" are used interchangeably and the directions "below" and "above" indicate a position in relation to the apical end of the dental device and the jaw-bone into which the dental device is to be implanted (see figure 2).

Thus, the current invention relates to a percutaneous dental device that comprises a soft tissue region that comprises an apical region with a first surface-topography and a distal region with a second surface-topography which are divided by and/or connected at the *in situ* CEJ of the percutaneous dental device.

In one aspect, a percutaneous dental device according to the current invention comprises a transitional region between the two surfaces above and below the CEJ, wherein the surface roughness of the transitional region successively roughens from the surface roughness above the *in situ* CEJ of the percutaneous dental device to the surface roughness below the *in situ* CEJ of the percutaneous dental device.

**Hard-tissue region**

In the current context, the hard-tissue region of a dental device is the region of said device that is in contact with bone. Among others, figures 2 and 19 show a schematic view of a hard-tissue region of a dental device according to the current invention. Surface topographies of hard tissue regions are well known in the art.

**Surface properties**

To facilitate an improved attraction of different soft tissues to the soft-tissue region of the dental devices, i.e., in order to mimic the natural surface of a tooth and to offer an optimal interface between a dental device and the surrounding soft tissue, there are several parameters of the surface that can play a role, such as surface properties, surface chemistry, material properties, choice of material, topographic properties and hydrophilic properties.

In the experimental section, the surface topography is shown to be a determining factor for soft tissue integration.

Prior art discusses the different topographies of the soft tissue region of natural teeth as summarized in table 1.

**Table1**

| Ref | Studied part | Technique | Sa mean (microns) |
|---|---|---|---|
| Edblad 2009 | Enamel | Interferometry | 0.42 ± 0.23 |
| | Cementum | | 0.6 ± 0.2 |
| Kong 2016 | Enamel | AFM | 0.46 + 0.2 |
| | Cementum | | 0.65 ± 0.28 |
| Whitehead 1997 | Enamel | Profilometry | 0.45 |
| Kocher 2001 | Cementum | Laser profilometry | 2.5 |
| Eliades 2004 | Enamel | Profilometry | 0.6 |
| Zhang 2000 | Enamel | Optical profilometry | |
| Hosoya 2003 | Enamel | Non-contact surface roughness shape-measuring apparatus | 1.72-9.15 |
| Wennerberg 1999 | Enamel | AFM and contact stylus profilometer | 1.27 |
| **Internal measurements** | **Enamel** | **Confocal microscopy** | **0.185 + 0.07** |
| | **Cementum** | | **0.477 ± 0.12** |
| ("Internal measurements" in table 1 are not prior art values, but measurements performed by the current inventors in the experimental part for the first time disclosed herein) | | | |

In the current context, the surface of the dental device has in particular been designed with a certain set of different topographic properties, effectively mimicking the surface-topography of a natural tooth. These surface topographic properties will be explained in the bellow.

A dental device of the current invention comprises a surface that is at least partially roughened, i.e., the surface of the dental device provides at least two distinct surface regions in the soft-tissue area that have a different surface roughness.

In the current context, the term "surface roughness" is used to describe the predominantly randomized distribution of valleys, peaks, depths and skewness of a surface, effectively mimicking the surface-topography of a natural tooth.

The surface of the soft tissue region of a dental device according to the current invention is intended to mimic the surface of the soft tissue region of a natural tooth as closely as possible, thus a surface topography is provided with at least two regions of individual isotropic topographies.

There are three related length scales that define heterogeneity: the width of the peak or 'high' roughness (W p), the width of the valley or 'low' roughness (W v) and the spacing between adjacent valleys (S). The term "isotropic topography " or "isotropically patterned " in the current context used interchangeably with "homogenous roughness" is in the current context used to describe that protrusions, peaks or 'high' roughness (W p) and valleys or 'low' roughness (W v) of the surface are randomized as well as randomly distributed over the surface region, i.e., the surface is randomnly patterned and not in an ordered or directional pattern, as would be the case for a surface with anisotropic topography.

For the avoidance of any doubt, any surface of a dental device of the current invention is machined and/or turned and thus, certain regularities will be detectable on a micrometre-level. Such a machined and/or turned surface is in the current context considered to be "smooth", "relative smooth" and/or "close enough to smooth". The currently described different homogeneous/isotropic degrees of topography, roughness and/or pattern are achieved by e.g., etching and/or sand-blasting of the "smooth", "relative smooth" and/or "close enough to smooth" surface. In the current context, the (Sa) of a smooth surface is no more than 0.4 $\mu$m (Sa).

In the current context, the term "micrometre- level" is used to describe measurement of small lengths to a precision of 0.01mm.

In consequence, the current invention relates to a percutaneous dental device comprising at least two distinct regions with different surface-topographies in the soft tissue region which are isotropically patterned, i.e., the surfaces have different isotropic topographies.

**Surface roughness**

Typically, the topography of a surface is defined by the Core Roughness Depth (also known as "Kernel Roughness Depth" or "core height" as the distance between the highest and the lowest level of the core surface) Sk. The Core Roughness Depth Sk is a 3D specific value. These 3D specific values are well defined according to ISO 25178.

For two dimensions, an extra procedure for filtering with suppression of the depth of roughness leads to the roughness profile according to DIN 4776. The definitions therein can directly be transformed into three dimensions. In particular, the Core Roughness Depth Sk can, as the 2D specific Core Roughness Depth Rk, be derived from the so-called Material Ratio Curve (also known as "Abbott curve").

The Abbott curve represents the height distribution of the surface's material. It is a cumulative function of the material portion of the surface at a particular depth below the highest peak of the surface. In other words, the Abbott curve describes the increase of the material portion of the surface with increasing depth of the roughness profile. At the highest peak, the material portion is 0%, while at the deepest recess (or "valley") the material portion is 100%. The minimal secant slope, i.e., a defined line of best fit, separates the Abbott curve into the three following ranges:

a) the Core Roughness Depth Sk [mm], i.e., the depth of the roughness core profile,
b) the reduced Peak Height Spk [mm], i.e., the averaged height of the peaks sticking out of the core range, and
c) the reduced Groove Depth Svk [mm], i.e., the averaged depth of the grooves sticking out of the core range.

The concept how these values are derived from the Abbott curve are well known to the person skilled in the art. From an idealized Abbott curve the 2D specific Core Roughness Depth Rk, the reduced Peak Height Rpk and the reduced Groove Depth Rvk can be derived. These parameters can directly be transformed to the 3D specific Core Roughness Depth Sk, reduced Peak Height Spk and reduced Groove Depth Svk.

The Core Roughness Depth Rk or, in three dimensions, Sk corresponds to the vertical distance between the left and right intercepts of the line through the ends of the minimal secant slope window of the Abbott curve. The location of the minimal secant slope window can be determined by shifting it along the Abbott curve until the slope between the two intersection points becomes minimal.

The topography can further be specified by the Skewness Ssk. The Skewness measures the symmetry of the variation of the surface about its mean plane. A Gaussian surface, having a symmetrical shape for the height distribution, has a Skewness of 0. A surface with a predominant plateau and deep recesses will tend to have a negative Skewness, whereas a surface having a number of peaks above average will tend to have a positive Skewness.

For a profile in two dimensions, the 2D specific Skewness Rsk is according to DIN EN ISO 4287 defined by the following formula:

$$R_{sk} = \frac{1}{R_q^3} \cdot \frac{1}{N} \cdot \sum_{n=1}^{N} (z_n - \bar{z})^3$$

where zn is the height or depth of the respective peak or valley, respectively, z is the mean height and Rq is the root-mean-square deviation of the surface.

For determining the Skewness Ssk of the topography in three dimensions, the formula is transformed as follows:

$$S_{sk} = \frac{1}{S_q^3} \cdot \frac{1}{M \cdot N} \cdot \sum_{m=1}^{M} \sum_{n=1}^{N} (z_n - \bar{z})^3$$

where Sq is the root-mean-square deviation of the surface according to the following formula:

$$S_q = \sqrt{\frac{1}{M \cdot N} \cdot \sum_{m=1}^{M} \sum_{n=1}^{N} (z_n - \bar{z})^2}$$

It has been found that asymmetric topographies with deep grooves are highly osteointegrative, and that thereby the absolute roughness values (Sa, Rmax, etc.) for example referred to in EP-B-1450722 are irrelevant.

The current invention relates to a percutaneous dental device comprising two distinct regions with surface-topographies of different isotropic topographies in the soft tissue region, wherein the surface roughness (Sa) of the region of the percutaneous dental device above the *in situ* cemento-enamel junction (CEJ) is at least 0.1 μm, such as at least 0.2 μm less than the surface roughness (Sa) of the region of the percutaneous dental below the *in situ* cemento-enamel junction (CEJ).

In the current context, Sa is the "arithmetical mean height of the scale limited surface" according to ISO 25178 and it's the most commonly used parameter to describe implant surface roughness.

In one embodiment, a percutaneous dental device of the current invention comprises at least two distinct regions with different surface-topographies in the soft tissue region, such as comprising two distinct regions with different surface-topographies in the soft tissue region, characterized in that

   a. the surface roughness (Sa) of the region of the percutaneous dental device which is in contact with soft tissue (epithelium) above the *in situ* cemento-enamel junction (CEJ) is no more than 0.4 μm (Sa), and
   b. the surface roughness (Sa) of the of the region of the percutaneous dental device which is in contact with soft tissue (connective tissue) below the *in situ* cemento-enamel junction (CEJ) is between 0.2-0.8 μm (Sa), and

wherein the surface roughness (Sa) of the region of the percutaneous dental device which is in contact with soft tissue (epithelium) above the *in situ* cemento-enamel junction (CEJ) is at least 0.1 μm, such as 0.2 μm less than the surface roughness (Sa) of the of the region of the percutaneous dental device which is in contact with soft tissue (connective tissue) below the *in situ* cemento-enamel junction (CEJ).

In another embodiment, a percutaneous dental device of the current invention comprises at least two distinct regions with different surface-topography in the soft tissue region, such as comprising two distinct regions with different surface-topographies in the soft tissue region, characterized in that

   c. the surface roughness (Sa) of the region of the percutaneous dental device which is in contact with soft tissue (epithelium) above the *in situ* cemento-enamel junction (CEJ) is no more than (0.185 $\pm$ 0.07) $\mu$m (Sa), and

d. the surface roughness (Sa) of the of the region of the percutaneous dental device which is in contact with soft tissue (connective tissue) below the *in situ* cemento-enamel junction (CEJ) is between 0.2-0.8 such as (0.477 $\pm$ 0.12) $\mu$m (Sa).

In addition, in some aspects, the percutaneous dental device comprises a transitional region between the two surfaces above and below the CEJ, wherein the surface roughness of the transitional region successively roughens from the surface roughness above the *in situ* CEJ of the percutaneous dental device to the surface roughness below the *in situ* CEJ of the percutaneous dental device.

In a currently preferred embodiment, in a percutaneous dental device according to the current invention, the placement of the *in situ* CEJ of the percutaneous dental device is determined in analogy to the CEJ of the surrounding tooth and/or teeth to the implant or placement site.

**Topographic optimization**

The current invention in one aspect further relates to a method for producing a percutaneous dental device with at least two distinct regions with different surface-topographies in the soft tissue region, characterized in that the surface of the soft tissue section of the dental device is roughened to achieve a homogenous surface roughness/isotropic topography (Sa) of the region of the percutaneous dental device above the *in situ* cemento-enamel junction (CEJ) which is at least 0.1 $\mu$m, such as at least 0.2 $\mu$m, less than the surface roughness (Sa) of the region of the percutaneous dental below the *in situ* cemento-enamel junction (CEJ).

There is a plethora of techniques known to the person skilled in the art to achieve preferred properties and/or topographies on the surface of a dental device, e.g., as disclosed in US-B-6,174,167 said optimized surface is obtained by machining, application of a textured surface or blasting with particles. It also discloses acid etching, applying growth factor, protein or other materials that promote, enhance and/or maintain bone-tissue growth and/or apposition. The implant is made from a biocompatible material, preferably from titanium or an alloy thereof. DE-A-4012731 describes a process for producing an implant made of titanium employing spark erosive techniques in order to provide a desired roughness to the implant's surface. Mechanical roughening of the implant's surface can further be combined with subsequent etching of the roughened surface, as is for example described in Li et al., J. Biomed. Mater. Res. 2002, 60 (2), pages 325-332. Titanium implants can be subjected to a blasting process and subsequent etching with a reducing acid, such as HF, HCl or HCl with H2SO4 (see EP-A-0388576).

WO-A-2005/027771 relates to a process for preparing a dental installation in which a dispersion is applied on a substrate having a first porosity, said dispersion forming upon sintering a ceramic layer with a second porosity.

EP-B-1450722 discloses a dental implant made of zirconia ceramic which after abrasive blasting is subjected to a treatment using phosphoric acid, sulphuric acid, hydrochloric acid or mixtures thereof.

In one embodiment, a dental device of the present invention can be prepared by etching the surface made of Titanium or a Titanium alloy by an etching solution comprising mineral acids or mixtures thereof, in particular H2SO4 or HCl/H2SO4 .

Sandblasting is generally performed using a pressure of 1 to 12 bar, preferably 4 to 10 bar. A considerably improved macroscopic roughness is achieved when using a hard material such as boron carbide. In a further preferred embodiment, Al2O3 particles having an average diameter of 250 to 500 mm are used.

As an alternative to sandblasting, in particular in a surface made of a ceramic material, the macroscopic roughness can also be provided by injection molding techniques. Injection molding techniques are known to a skilled person and are for example described in US-A-2004/0029075. According to these techniques, casting molds with cavities are used, said cavities corresponding to the peaks of the molded implant's macroscopic roughness. The cavities of the casting mold are slightly greater in proportion than the peaks to be provided, taking into account the shrinking of the ceramic after injection molding. The casting molds themselves may be treated by sand blasting, anodization, laser and/or by erosion techniques in order to produce the cavities or the structured surface on the inner surface of the molds.

It is also thinkable to provide a macroscopic roughness by milling or grinding. For this purpose, milling or grinding devices having a defined grain size are used in order to guarantee a desired macroscopic roughness of the surface.

For preparing the microstructure of the surface properties and/or topography, it is further preferred that the etching solution described above comprises at least 50 vol.-%, more preferably at least 80 vol.-% of concentrated hydrofluoric acid.

The etching solution can further comprise at least one compound selected from the group consisting of phosphoric acid, nitric acid, ammonium fluoride, sulfuric acid, hydrogen peroxide and bromic acid. Preferably, the etching solution comprises sulfuric acid in an amount of 50 vol.-% at most.

The etching time depends highly on the etching solution used and typically ranges from about 10 seconds to about 120 minutes. The etching time is preferably about 1 minute to about 60 minutes, about 20 minutes to about 40 minutes, such as about 30 minutes. In one aspect of the current invention, the etching time is between about 4 minutes to about 7 minutes.

In embodiments the etching time is between1-20 minutes, such as between 1-10 minutes, 2-5 minutes, 3-6 minutes, 4-8 minutes, or 4-7 minutes. In embodiments, etching is performed for no longer than 20 minutes, such as no longer than 10 minutes, 9 minutes, 8 minutes, 7 minutes, 6 minutes, 5 minutes, 4 minutes, 3 minutes, 3 minutes or 1 minute, In embodiments, etching is performed for less than 20 minutes, such as les than 10 minutes, 9 minutes, 8 minutes, 7 minutes, 6 minutes, 5 minutes, 4 minutes, 3 minutes, 3 minutes or 1 minute,

In one embodiment, the etching is performed by acid etching with a mixture of $HCl/H2SO4$ of a titanium and/or a titanium alloy surface for 4-7 minutes.

Preferably, the etching is followed by washing the dental implant, the washing comprising the subsequent step or the subsequent steps of

a) rinsing the dental implant with a NaCl solution and/or
b) rinsing the dental implant with deionized water.

The performance of the washing step can be improved by using ultrasound. Thereby, grains, grain agglomerates or reaction products which loosely adhere to the surface are effectively removed.

In consequence, the current invention in aspects relates to a method for producing a percutaneous dental device, wherein the soft tissue section of the dental device is roughened by any one or a combination of machining, application of a textured surface, employing spark erosive techniques, mechanical roughening, sintering, molding techniques, milling or grinding, blasting with particles and/or acid etching (e.g. by a treatment using phosphoric acid, sulphuric acid, hydrochloric acid, nitric acid, ammonium fluoride, hydrogen peroxide and/or bromic acid), such as, but not limited to subsequent etching of the roughened surface. In another aspect, the soft tissue section of the dental device is topographically optimized by applying growth factor, protein or other materials that promote, enhance and/or maintain soft-tissue growth and/or apposition.

The current invention thus in one aspect relates to a method for producing a percutaneous dental device according, characterized in that the surface of the soft tissue section of the dental device is roughened to achieve

a. one surface roughness (Sa) of the region of the percutaneous dental device which is in contact with soft tissue (epithelium) above the in situ cemento-enamel junction (CEJ) of no more than (0.185 $\pm$ 0.07) $\mu$m (Sa), and
b. the surface roughness (Sa) of the of the region of the percutaneous dental device which is in contact with soft tissue (connective tissue) below the in situ cemento-enamel junction (CEJ) is between 0.2-0.8 such as (0.477 $\pm$ 0.12) $\mu$m (Sa).

The current invention also relates to a percutaneous dental device produced by a method according to the invention.

**Uses of dental implant systems according to the current invention**

The current invention relates to the use of a percutaneous dental device according to the current invention for inducing and/or guiding healing and/or regeneration of epithelial tissue above the *in situ* CEJ of the percutaneous dental device and for use in inducing and/or guiding healing and/or regeneration of connective tissue below the *in situ* CEJ of the percutaneous dental device.

In particular, the current invention relates to the use of a percutaneous dental device according to the current invention for inducing and/or guiding histologically correct and/or more natural soft tissue healing and/or soft tissue regeneration in the supracrestal attached tissue at the implant site and/or placement site of said percutaneous dental device.

In a presently preferred embodiment, the current invention relates to the use of a percutaneous dental device according to the current invention for determining and/or controlling the transition between junctional epithelium and supracrestal connective tissue in the supracrestal attached tissue at the placement site of a percutaneous dental device.

**Other embodiments**

It is to be understood that while the present invention has been described in conjunction with the detailed description thereof, the foregoing description is intended to illustrate and not limit the scope of the invention, which is defined by the scope of the appended claims.

Other aspects, advantages, and modifications are within the scope of the following claims.

**Experimental section**

The present invention is further illustrated by the following non-limiting experiments.

**Experiment 1**

*Objective*

The objective of the following experiments was to mimic the natural surface of the tooth to offer an optimal interface between a dental device and the surrounding soft tissue (as schematically depicted in figure 3). There are several parameters of these two surfaces that could potentially play a role, like for example surface properties, surface chemistry, material properties, etc. For these experiments we focused on the parameter surface roughness, since it has been shown to be the determining factor for osseointegration and is known to affect soft tissue cells as well.

*Materials & Methods*

Surface roughness measurements of extracted pig teeth

Extracted teeth from Göttingen Minipigs were measured for their surface roughness with confocal microscopy. Sa values were measured according to ISO 25178 using a Gaussian filter with a 30 $\mu$m cut-off. The results have shown that the enamel surface (4) above the CEJ (7) is significantly smoother compared to the cementum surface (3) below the CEJ (7) (Sa value of 0.185 $\pm$ 0.07 $\mu$m (Sa) for enamel (4) compared to 0.477 $\pm$ 0.12 $\mu$m (Sa) for cementum (3)).

Production of biphasic abutments

Commercial titanium abutments were used as a basis for the production of the biphasic test abutments. The surface roughness of the commercial abutments was measured and found to be in the range of the enamel surface of natural teeth (4) (Sa of 0.14 $\pm$ 0.02 $\mu$m (Sa)).
To introduce a rougher surface for part B (5), as shown in figure 3, the abutments were masked (part A (6) in figure 3) and acid etched such that the acid could only etch the bottom part (5) below the *in situ* CEJ (9) of the abutment. Two different ratios of A (6) and B (5) were produced and compared to commercially available untreated abutments (see figure 4).

Minipig model

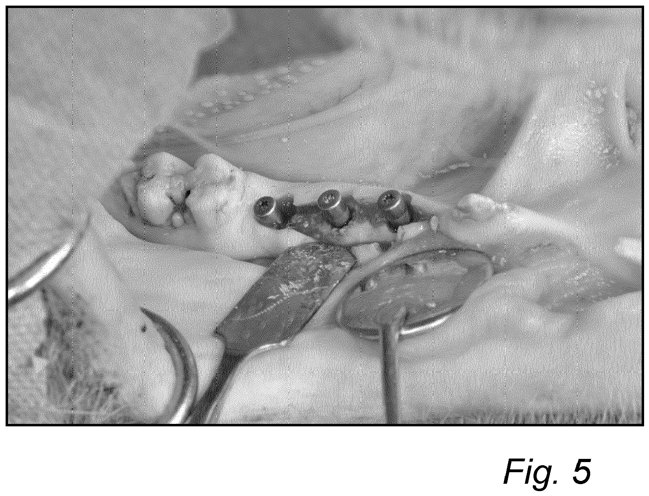

As shown in figure 5, bone level implants were placed in the mandible of Göttingen Minipigs and equipped with the test and control abutments and left 8 weeks for healing before histological processing.

*Results*

Production of biphasic titanium abutments

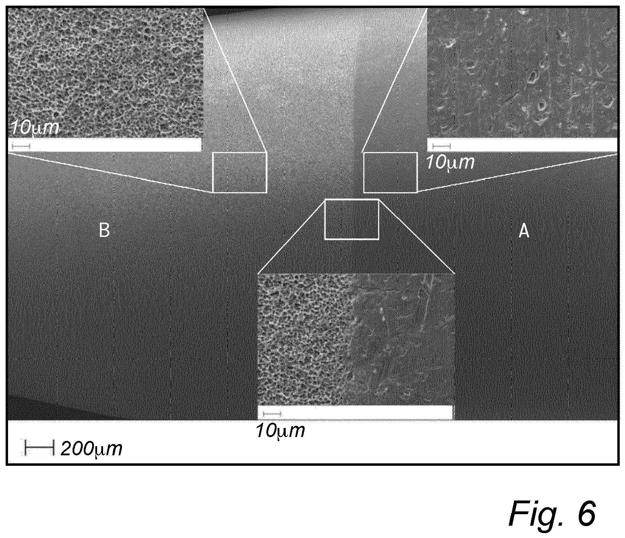

As shown in figure 6, the surface roughness (Sa value) of the etched part (Part B (5)) was confirmed to be 0.43 $\pm$ 0.02 $\mu$m (Sa) and part A (6) was unchanged by the process and remained at Sa of 0.14 $\pm$ 0.02 $\mu$m (Sa). The roughness values of the test abutments were in the range of the values of a natural tooth (Sa value of 0.185 $\pm$ 0.07 $\mu$m (Sa) for enamel compared to 0.477 $\pm$ 0.12 $\mu$m (Sa) for cementum).

Histological analysis after healing

Figure 7 depicts a histological section of a natural minipig tooth. The epithelial layer (1) stops around the enamel-cementum junction (CEJ).

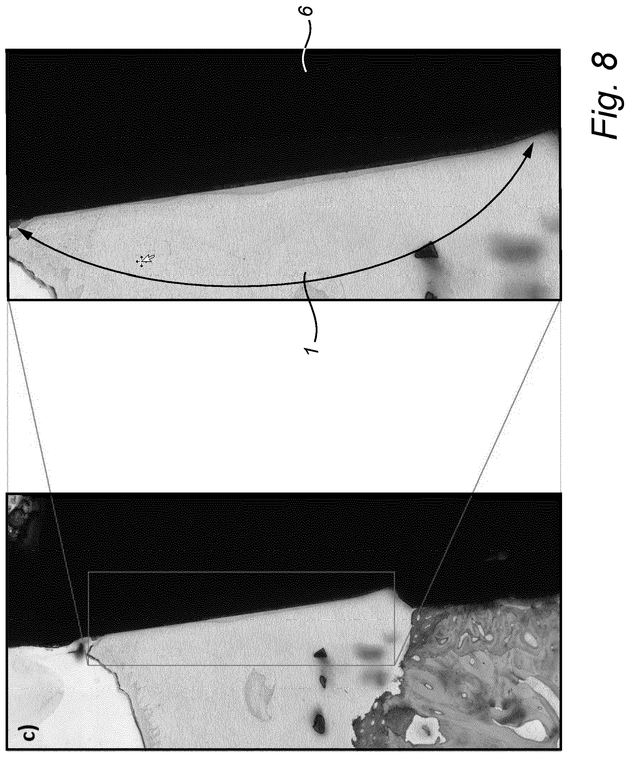

Figure 8: Histological section of a commercial smooth (machined) abutment. The whole abutment surface is covered with an epithelial layer (1).
Figure 9 shows a histological section of the customized bi-modal abutment (15). The top half of the abutment (6) was machined, and the bottom half (5) was roughened (2.5 mm from the implant shoulder). The transition between smooth and rough can be seen in the insert. It can equally be seen that similarly to the situation in the natural tooth, the epithelial layer (1) stops around the margin between smooth and rough. Below the "*in situ* CEJ" (9) the connective tissue (2) layer is in contact with the abutment (15).

Figure 10 shows a histological section of the customized abutment (15). The top 4 mm of the abutment (6) was machined, and the bottom 1 mm (5) was roughened. The transition between smooth and rough can be seen in the insert. Also, in this example, the epithelial layer (1) stops around the margin defining the *in situ* CEJ (9) between smooth and rough.

**Experiment 2**

**Introduction**

SEM-analysis of ceramic abutments, to check the leak-tightness of the Viton protection during the acid treatment.

**Materials and Methods**

Samples:

2 ceramic abutments, height acid treated 1.0 mm
2 ceramic abutments, height acid treated 2.5 mm

Method

The samples were analyzed using the Straumann scanning electron microscope (Zeiss Supra 55, QS Nr. 57113) with a field electron emitter (FE-SEM), and an EDX-detector (Oxford Instruments MicroAnalysis System) for the determination of chemical elements.

**Results**

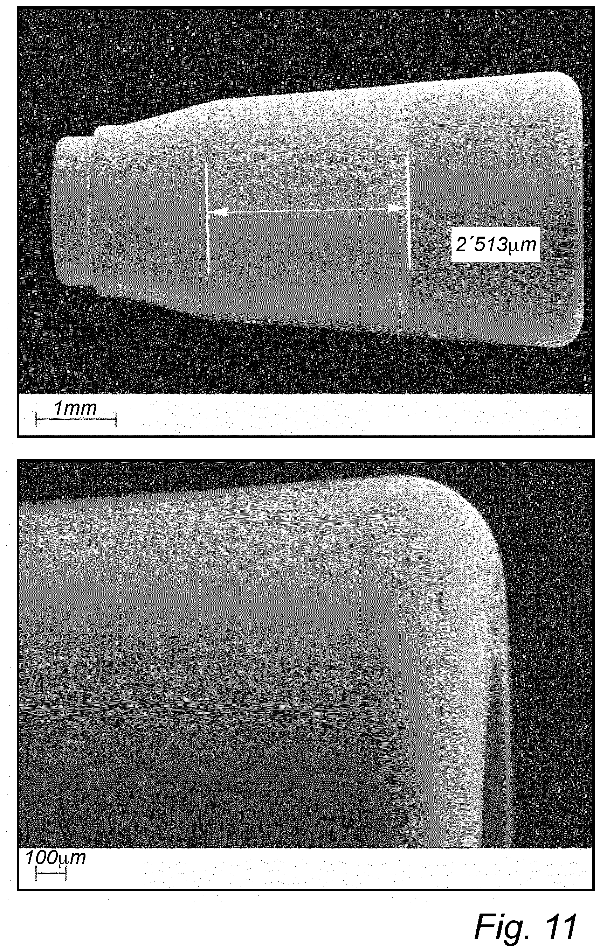

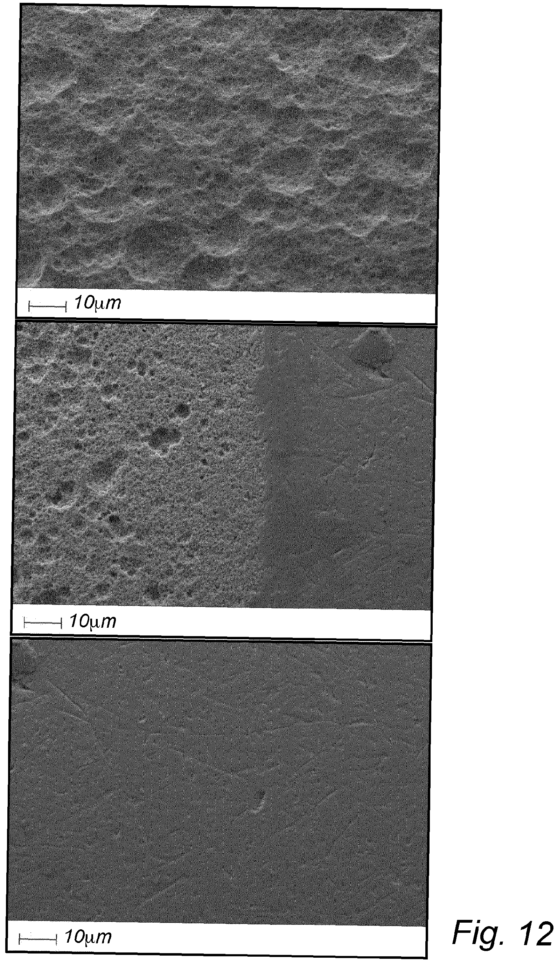

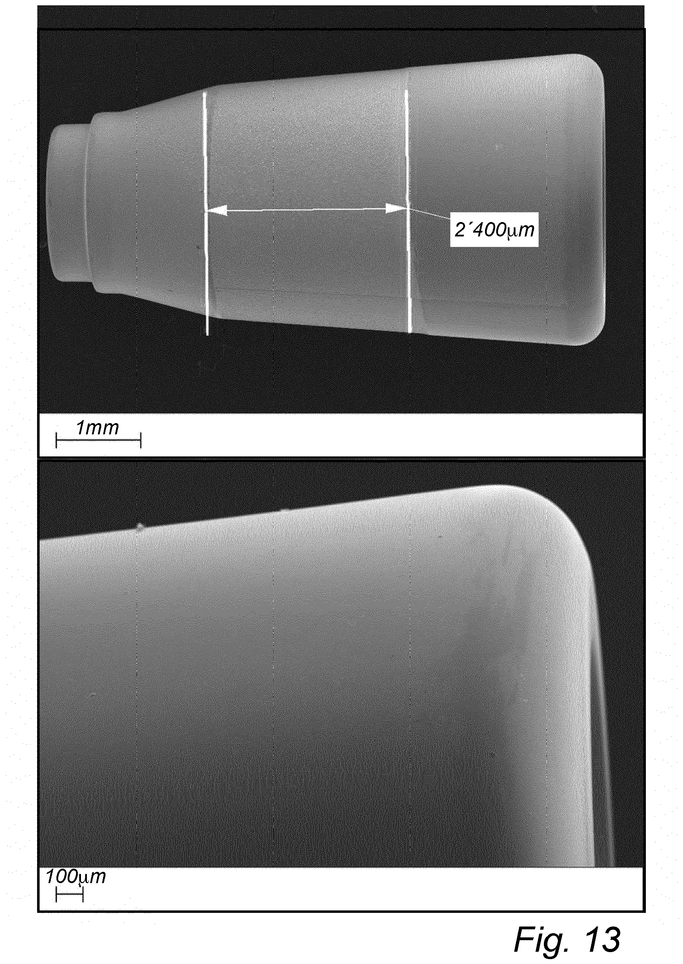

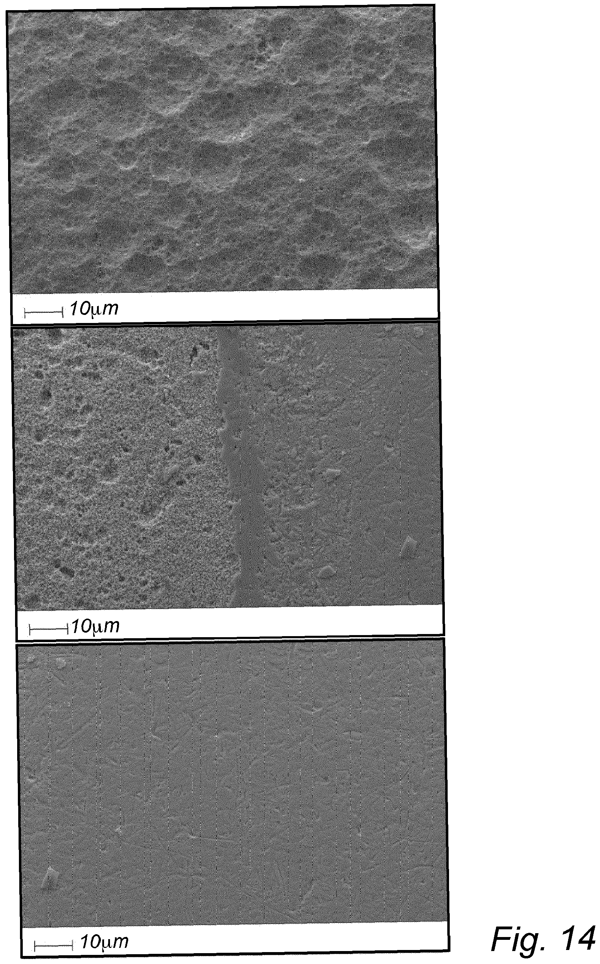

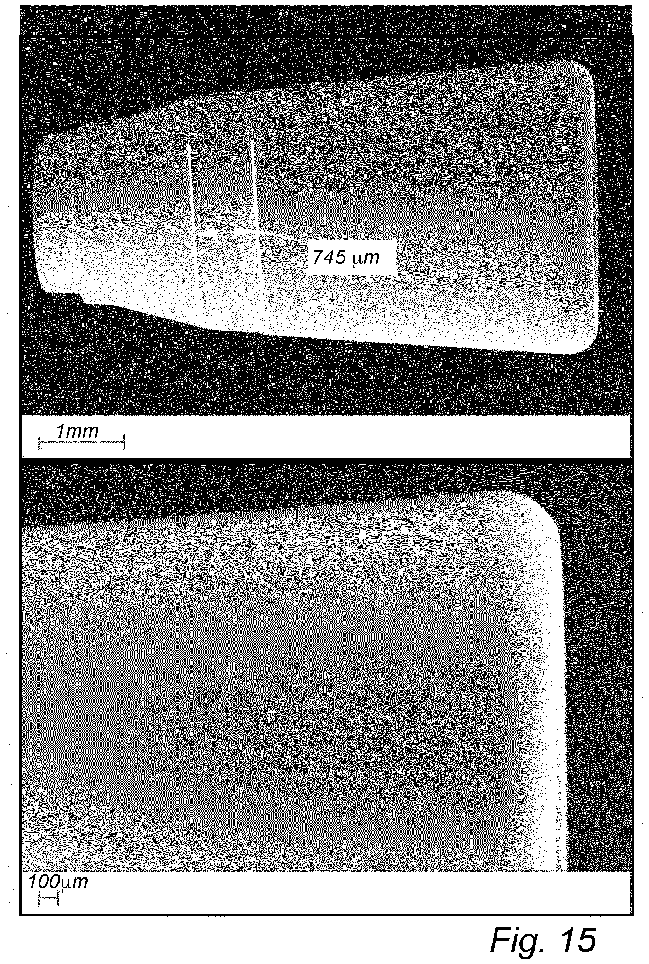

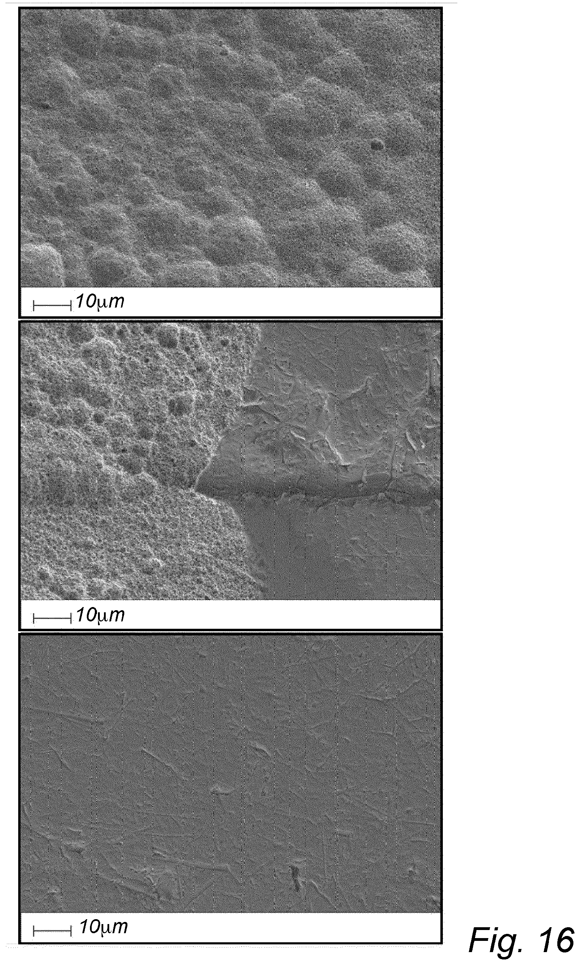

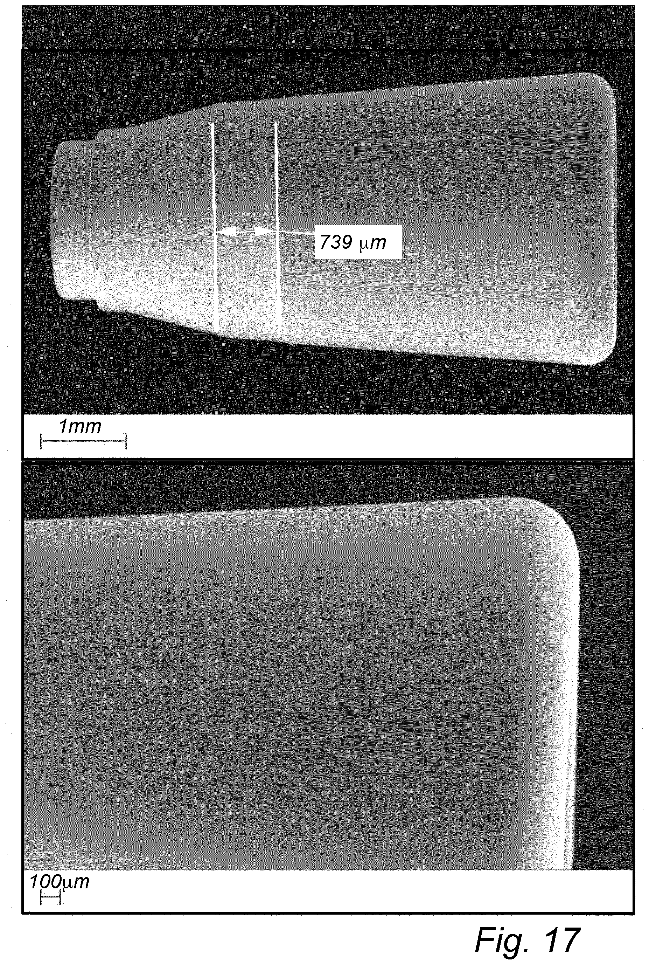

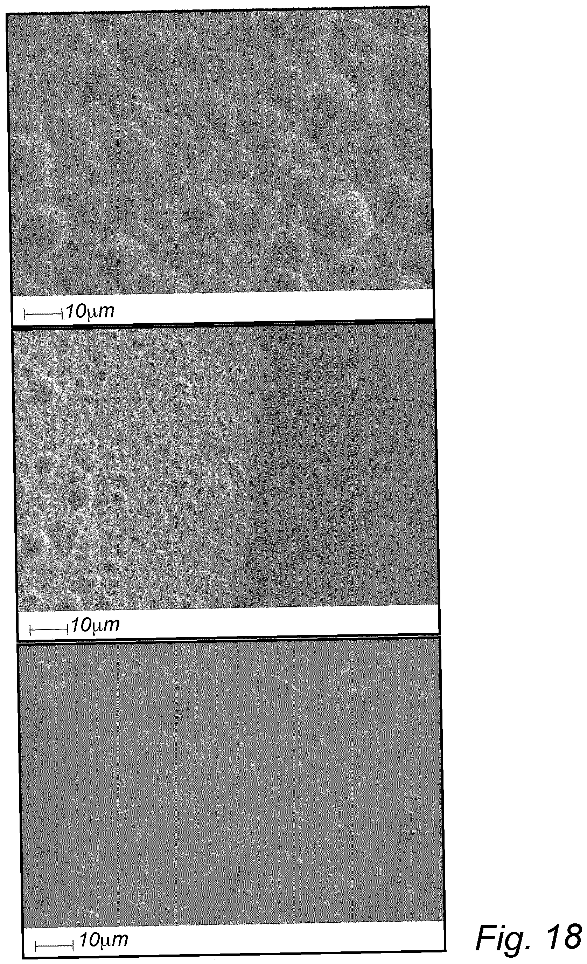

The interface etched surface/machined surface is well delimited, and no leaks of acid are visible on rest of the machined surface.
The distance on the 2.5 mm abutments is respected.
The distance on the 1.0 mm abutments is lower than expected.
See figures 11-18 and table 2.

Table 2: Average measurements of different topographic parameters on the soft-tissue surface of the abutments. (Gaussian filter with cut-off of 30 $\mu$m, measured according to ISO 25178)

| | Average (of 3 samples) in $\mu$m | | | |
|---|---|---|---|---|
| | Region A (6) (smooth) | Standard deviation | Region B (5) (rough) | Standard deviation |
| **Sa** | 0,13 | 0,01 | 0,42 | 0,02 |
| **Sz** | 0,95 | 0,03 | 2,66 | 0,18 |
| **Sk** | 0, 43 | 0,05 | 1,43 | 0,09 |
| **Ssk** | -0,19 | 0,05 | 0,22 | 0,10 |

**List of Reference Numbers in Figures and Description**

1: Epithelium / epithelial layer
2: Connective tissue /connective tissue layer
3: Cementum
4: Enamel
5: Soft-tissue region of dental device below/apical the cemento-enamel junction (CEJ)
6: Soft-tissue region of dental device above/distal the cemento-enamel junction (CEJ)
7: Cemento-enamel junction (CEJ)
8: Dental implant

**EP 4 389 067 A1**

9: *In situ* cemento-enamel junction (CEJ)
10: Soft tissue region of implant
11: Hard tissue
12: Hard tissue region of implant
13: Soft-tissue level dental implant
14: Crown
15: Abutment
16: Bone level dental implant
17: Soft-tissue region of crown
18: One-piece dental implant

**List of References**

1. Edblad et al, Swed Dent J. 2009; 33: 41-48,
2. Kong et al, Int J Clin Exp Med 2016;9(4):7201-7208 www.ijcem.com ZISSN:1940-5901/IJCEM0024422
3. Whitehead et al, Journal of Oral Rehabilitation 1997 24; 449-4
4. Eliades et al, 2004, European Journal of Orthodontics 26, (2004) 333-338.
5. Zhang et al, Caries Res 2000;34:164-174
6. Hosoya et al, 2003, Journal of Dentistry (2003) 31, 543-548
7. Wennerberg et al, Eur J Oral Sci 1999; 107: 297$\pm$306
8. WO2014195027A2-EP3003203
9. WO2014195025A2-EP3003204
10. EP-A-2161000
11. EP1982671

**Claims**

1. Use of a percutaneous dental device which comprises a soft-tissue region with at least two distinct surface regions with different surface-topographies for improving soft tissue healing and/or soft tissue regeneration of the supracrestal epithelium and the supracrestal connective tissue at the placement site of the device.

2. Use of a percutaneous dental device according to claim 1, for improving soft tissue healing and/or soft tissue regeneration of the junctional epithelium, the sulcular epithelium and the supracrestal connective tissue at the placement site of the device.

3. Use of a percutaneous dental device according to claim 1 or 2, for inducing regeneration of the supracrestal attached tissue at the placement and/or implantation site of said percutaneous dental device, for improving regrowth and/or regeneration of a biological width at the placement site of said percutaneous dental device, and/or for determining and/or controlling the transition between junctional epithelium and supracrestal connective tissue in the supracrestal attached tissue at the placement and/or implantation site of the device.

4. Use of a percutaneous dental device according to any of the preceding claims, wherein healing and/or regeneration of epithelial tissue is induced and/or guided above an *in situ* cemento-enamel junction (CEJ) of the percutaneous dental device and healing and/or regeneration of connective tissue is induced and/or guided below the *in situ* CEJ of the percutaneous dental device.

5. A percutaneous dental device that comprises a soft tissue region with at least two distinct regions with different surface-topographies.

6. A percutaneous dental device according to claim 7 that comprises a soft tissue region consisting of two distinct regions with different surface-topographies.

7. A percutaneous dental device according to claim 7 or 8, wherein the soft tissue region has an apical region with a first surface-topography and a distal region with a second surface-topography.

8. A percutaneous dental device according to any one of claims 7- 9, wherein the interphase between both surfaces forms an *in situ* CEJ.

9. A percutaneous dental device according to claim 10, wherein the apical region and the distal region are divided by the *in situ* CEJ of the percutaneous dental device.

10. A percutaneous dental device according to any one of claims 7- 11, wherein the two distinct regions with different surface surface-topographies in the soft tissue region are isotropically patterned.

11. A percutaneous dental device according to any one of claims 7-12, **characterized in that** the surface roughness (Sa) of the region of the percutaneous dental device above the *in situ* cemento-enamel junction (CEJ) is at least 0.1 μm, such as at least 0.2 μm less than the surface roughness (Sa) of the region of the percutaneous dental below the *in situ* cemento-enamel junction (CEJ).

12. A percutaneous dental device according to any one of claims 7-13, **characterized in that**

a. the surface roughness (Sa) of the region of the percutaneous dental device which is in contact with soft tissue (epithelium) above the *in situ* cemento-enamel junction (CEJ) is no more than 0.4 μm (Sa), and
b. the surface roughness (Sa) of the of the region of the percutaneous dental device which is in contact with soft tissue (connective tissue) below the *in situ* cemento-enamel junction (CEJ) is between 0.2-0.8 μm (Sa), and
c. wherein the surface roughness (Sa) of the region of the percutaneous dental device which is in contact with soft tissue (epithelium) above the *in situ* cemento-enamel junction (CEJ) is at least 0.1 μm, such as 0.2 μm less than the surface roughness (Sa) of the of the region of the percutaneous dental device which is in contact with soft tissue (connective tissue) below the *in situ* cemento-enamel junction (CEJ).

13. A percutaneous dental device according to any one of claims 7-14, **characterized in that**

a. the surface roughness (Sa) of the region of the percutaneous dental device which is in contact with soft tissue (epithelium) above the *in situ* cemento-enamel junction (CEJ) is no more than (0.19 ± 0.07) μm (Sa), and
b. the surface roughness (Sa) of the of the region of the percutaneous dental device which is in contact with soft tissue (connective tissue) below the *in situ* cemento-enamel junction (CEJ) is between 0.2-0.8 μm (Sa) specifically (0.48 ± 0.12) μm (Sa).

14. A percutaneous dental device according to any one of claims 7-13 that is a dental implant system.

15. A percutaneous dental device according to any one of claims 7-14, wherein the surface of the percutaneous dental device comprises and/or consists of titanium, zirconium, titanium and/or zirconium alloys, dental ceramic, zirconia ceramic, full-contour zirconia (glazed), classical zirconia veneered with dental porcelain, yttrium-stabilized zirconium oxide (zirconia) in predominantly tetragonal form and/or hydroxyapatite coated zirconia-alumina composite.

*Fig. 1*

*Fig. 2*

*Fig. 3*

*Fig. 4*

*Fig. 5*

*Fig. 6*

*Fig. 7*

Fig. 8

*Fig. 9*

Fig. 10

2'513μm

1mm

100μm

*Fig. 11*

Fig. 12

Fig. 13

Fig. 14

745 μm

1mm

100μm

*Fig. 15*

Fig. 16

739 μm

1mm

100μm

*Fig. 17*

Fig. 18

*Fig. 19a*

*Fig. 19b*

*Fig. 19c*

Fig. 20a      Fig. 20b

Fig. 20c

Fig. 21a

Fig. 21b

Fig. 21c

Fig. 21d

Fig. 21e

Fig. 21f

*Fig. 21g*

Fig. 21h

Europäisches Patentamt

European Patent Office

Office européen des brevets

# EUROPEAN SEARCH REPORT

Application Number

EP 22 21 5673

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | IT UB20 155 412 A1 (TORINO POLITECNICO; CNR ? CONSIGLIO NAZ DELLE RICERCHE) 10 May 2017 (2017-05-10) * paragraph [0082]; claims; figures * | 1-15 | INV. A61C19/06 A61C8/00 |
| X | US 2002/182567 A1 (HURSON STEVEN M [US] ET AL) 5 December 2002 (2002-12-05) * paragraphs [0040], [0047]; claims; figures * | 1-10,14, 15 | |
| X,D | EP 1 982 671 A1 (STRAUMANN HOLDING AG [CH]) 22 October 2008 (2008-10-22) * paragraphs [0071], [0100]; claims; figures * | 1-11,14, 15 | |
| X | DE 20 2019 105040 U1 (LASAK S R O [CZ]) 13 February 2020 (2020-02-13) * paragraphs [0024] – [0033], [0041], [0045], [0047], [0050], [0055], [0059], [0074], [0079]; claims; figures * | 1-15 | |
| A | US 2001/039454 A1 (RICCI JOHN [US] ET AL) 8 November 2001 (2001-11-08) * the whole document * | 1-15 | TECHNICAL FIELDS SEARCHED (IPC) A61C |

The present search report has been drawn up for all claims

| Place of search | Date of completion of the search | Examiner |
|---|---|---|
| Munich | 15 May 2023 | Fouquet, Michèle |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 21 5673

This annex lists the patent family members relating to the patent documents cited in the above-mentioned European search report.
The members are as contained in the European Patent Office EDP file on
The European Patent Office is in no way liable for these particulars which are merely given for the purpose of information.

15-05-2023

| Patent document cited in search report | | Publication date | Patent family member(s) | | Publication date |
|---|---|---|---|---|---|
| IT UB20155412 | A1 | 10-05-2017 | ----- | | ----- |
| US 2002182567 | A1 | 05-12-2002 | US 2002182567 | A1 | 05-12-2002 |
| | | | US 2003124489 | A1 | 03-07-2003 |
| | | | WO 03103527 | A2 | 18-12-2003 |
| EP 1982671 | A1 | 22-10-2008 | AU 2008201124 | A1 | 06-11-2008 |
| | | | CA 2625250 | A1 | 19-10-2008 |
| | | | CN 101559007 | A | 21-10-2009 |
| | | | EP 1982671 | A1 | 22-10-2008 |
| | | | ES 2569934 | T3 | 13-05-2016 |
| | | | JP 5282868 | B2 | 04-09-2013 |
| | | | JP 2008264546 | A | 06-11-2008 |
| | | | KR 20080094624 | A | 23-10-2008 |
| | | | US 2008261179 | A1 | 23-10-2008 |
| | | | ZA 200801863 | B | 26-11-2008 |
| DE 202019105040 | U1 | 13-02-2020 | NONE | | |
| US 2001039454 | A1 | 08-11-2001 | EP 1365711 | A1 | 03-12-2003 |
| | | | US 2001039454 | A1 | 08-11-2001 |
| | | | US 2008015616 | A1 | 17-01-2008 |
| | | | WO 02069851 | A1 | 12-09-2002 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2161000 A
- WO 2014195027 A2
- WO 2005027771 A
- EP 0870478 A
- US 6165925 B
- EP 1450722 B
- US 6174167 B
- DE 4012731 A
- EP 0388576 A
- US 20040029075 A
- EP 3003203 A
- WO 2014195025 A2
- EP 3003204 A
- EP 1982671 A

### Non-patent literature cited in the description

- **LI et al.** *J. Biomed. Mater. Res.,* 2002, vol. 60 (2), 325-332
- **EDBLAD et al.** *Swed Dent J.,* 2009, vol. 33, 41-48
- **KONG et al.** *Int J Clin Exp Med,* 2016, vol. 9 (4), ISSN 1940-5901/IJCEM0024422, 7201-7208, www.ijcem.com
- **WHITEHEAD et al.** *Journal of Oral Rehabilitation,* 1997, vol. 24, 449-4
- **ELIADES et al.** *European Journal of Orthodontics,* 2004, vol. 26 (2004), 333-338
- **ZHANG et al.** *Caries Res,* 2000, vol. 34, 164-174
- **HOSOYA et al.** *Journal of Dentistry,* 2003, vol. 31, 543-548
- **WENNERBERG et al.** *Eur J Oral Sci,* 1999, vol. 107, 297-306